**Europäisches Patentamt**

**European Patent Office**

**Office européen des brevets**

(19)

(11) Veröffentlichungsnummer: **0 246 631 B1**

(12) **EUROPÄISCHE PATENTSCHRIFT**

(45) Veröffentlichungstag der Patentschrift:
**11.10.89**

(21) Anmeldenummer: **87107331.8**

(22) Anmeldetag: **20.05.87**

(51) Int. Cl.⁴: **B63H 23/18**

(54) Schiffsantriebsanlage.

(30) Priorität: **23.05.86 DE 3617425**
**16.07.86 DE 3623980**

(43) Veröffentlichungstag der Anmeldung:
**25.11.87 Patentblatt 87/48**

(45) Bekanntmachung des Hinweises auf die Patenterteilung:
**11.10.89 Patentblatt 89/41**

(84) Benannte Vertragsstaaten:
**CH DE FR GB IT LI NL**

(56) Entgegenhaltungen:
**FR-A- 586 050**

(73) Patentinhaber: **RENK TACKE GmbH, Gögginger Strasse 73, D-8900 Augsburg(DE)**

(72) Erfinder: **Terörde, Erwin, Schwalbenweg 1, D-4440 Rheine(DE)**

## Beschreibung

Die Erfindung betrifft eine Schiffsantriebsanlage mit mehr als zwei Motoren zum Antrieb zweier Verstellpropeller und wenigstens eines Generators.

Bei Schiffen mit sehr unterschiedlichen Fahrprofilen bezüglich Schiffsgeschwindigkeit, Manövrierfähigkeit und zugehörigem, sehr unterschiedlichen Elektroenergiebedarf ist eine optimale Ausnutzung des zur Verfügung stehenden Brennstoffes für die Antriebsmotoren sowie deren Betriebsstunden je Fahrroute von größter Wichtigkeit.

Schiffe, die über kurze Zeiten größte Antriebsleistungen erfordern, während langer Einsatzzeiten jedoch mit weniger als 50% Leistung oder weniger als 70% der möglichen Schiffsgeschwindigkeit betrieben werden, sind vorwiegend mit vier Motoren ausgerüstet. Zu Schiffstypen dieser Art zählen beispielsweise Versorgungsschiffe und Schlepper. Von den vier Motoren sind überwiegend nur zwei Motoren im Betrieb. Kennzeichnend für diese Anlagen ist, daß die installierten bzw. betriebenen Motoren jeweils einem Propellerstrang zugeordnet sind, so daß voneinander unabhängige Backbord- und Steuerbordanlagen vorhanden sind.

Auch Nebenabtriebe, beispielsweise für Generatoren, sind nur von der ihnen zugeordneten Steuer- und Backbordmaschine antreibbar.

Bekannt ist auch der zunehmende Einsatz von Vater- und Sohnanlagen bei Doppelschraubern, wobei jeweils eine Vater- und Sohnanlage auf eine Schraube arbeitet. Vorausgesetzt wird auch hierbei, daß beide Propeller symmetrisch angetrieben werden müssen. Unter dieser Voraussetzung kann dann das Fahrprofil in drei Bereiche unterteilt werden. Eine Querverbindung zum Antrieb beider Propeller durch eine der Vater-und Sohnanlagen ist bisher noch nicht möglich gewesen.

Durch die DE-AS 28 50 963 ist es zwar bei Kriegsschiffen mit Doppelschrauben und zwei Antriebsmotoren bekannt, eine der Antriebsmaschinen stillzusetzen und die andere zum Antrieb beider Schrauben zu verwenden oder beide Antriebsmaschinen auf beide oder eine der Schrauben arbeiten zu lassen, um die Manövrierfähigkeit zu erhöhen. Erreicht werden diese Möglichkeiten durch die Verwendung von Verbindungsgetrieben zwischen den Antriebswellen der Antriebsmaschinen. Die Verbindungsgetriebe sind über Schaltkupplungen zu- oder abschaltbar. Diese Lösung läßt sich jedoch für Antriebsanlagen bei Doppelschraubern mit mehr als zwei Antriebsmaschinen nicht verwenden. Eine weitere Antriebsanlage mit maximal zwei Motoren zeigt die CH-PS 379 313. Für den Fall eines Propelleraussetzens ist hierbei lediglich vorgesehen, die Anlage ohne Fahrtunterbrechung raschestens umzustellen und gleichzeitig die defekt gewordenen Antriebsteile abzuschalten.

Der Erfindung liegt die Aufgabe zu Grunde, eine Schiffsantriebsanlage nach dem Gattungsbegriff des Patentanspruchs 1 so zu gestalten, daß eine optimale Ausnutzung der gesamten installierten, sich auf die einzelnen Antriebsmotoren verteilenden Leistungen unter Berücksichtigung des sehr unterschiedlichen Fahrprofils des Schiffes, der Motor-und Propellerkennfelder und des unterschiedlichen Einsatzes von Generatoren gewährleistet wird. Die Erfindung als Lösung dieser Aufgabe ist durch die im kennzeichnenden Teil des Patentanspruchs 1 angegebenen Merkmale bestimmt.

Außer den in den abhängigen Ansprüchen angegebenen Merkmalen sind folgende konstruktive Gestaltungen zur weiteren Ausbildung der Erfindung wesentlich:

Die Kegelräder sind mit den Schaltritzeln und mit den Wellen der Schaltstufen verbunden. Die Motoren sind parallel zueinander angeordnet und mit parallel verlaufenden Getriebewellen verbunden. Jedem Propeller können Motoren unterschiedlicher Leistungen und Drehzahlen mit einem entsprechenden Ausgleich in der Zahnradverbindungsstufe zugeordnet sein. Die Schaltkupplungen zwischen der Verbindungswelle und den Getriebeblöcken sind zwischen den beiden Lagern der fliegend ausgebildeten Kegelritzel bzw. Kegelradwelle angeordnet ist. Die Schaltkupplungen sind als Lastschaltkupplungen ausgeführt. Zur Verbindung aller Motorenantriebswellen mit der Verbindungswelle zwischen den Getriebeblöcken sind die Kupplungen als Hohlwellenkupplungen ausgeführt, auf deren Hohlwellenritzel und Zahnräder der Getriebestufen angordnet sind. Zur Leistungsübertragung auf Nebenabtriebe, beispielsweise für elektrische Generatoren, sind die Motorenantriebswellen zusätzlich durch Getrieberäder miteinander verbunden. Jede Hilfsmaschine kann durch einen ihr zugeordneten Motor sowohl bei abgeschalteten als auch bei eingeschalteten Propeller angetrieben werden. Bei einer Ausführung mit außenliegenden Motoren können durch die Verbindung der Kegelräder mit den Schaltritzeln beim Antrieb beider Propeller durch einen der innenliegenden Motoren die Leistungen aller übrigen Motoren auf die ihnen zugeordneten Hilfsmaschinen übertragen werden. Außerdem können durch einen der innenliegenden Motoren einer Propellerseite die innenliegenden Hilfsmaschinen beider Propeller- bzw. Getriebeseiten sowohl bei ein- als auch bei abgeschalteten Propellern über die Kegelräder der Verbindungswelle zwischen den Getriebeblöcken, die mit den Wellen der Schaltstufe verbunden sind, angetrieben werden.

Die Erfindung bietet die Möglichkeit, durch einen Motor einer Doppelschraubenanlage mit mehr als zwei Motoren beide Propeller mit ökonomischer Drehzahl anzutreiben und zwar unter Ausnutzung des Propellerkennfeldes und somit mit bestem Wirkungsgrad. Dabei kann, falls erforderlich, die restliche installierte Motorleistung zur Stromerzeugung verwendet werden. Mit der erfindungsgemäßen Lösung wird auch erreicht, daß die Kennfelder (Leistung/Drehzahl) der Motoren im Verhältnis zu den Propellern bei einem Betrieb von vier Motoren auf zwei Propeller, bei einem Betrieb von zwei Motoren auf zwei Propeller bzw. bei dem Betrieb eines Motors auf zwei Propeller immer übereinstimmen. Das bedeutet, daß die jeweils eingespeiste Leistung der erforderlichen bzw. maximalen Abtriebsleistung entspricht. Die Gesamtanlage ist im Hinblick auf das Maschinenraumangebot und die Lage des Maschinenraumes variabel gestaltbar.

In der Zeichnung ist ein Ausführungsbeispiel der Erfindung rein schematisch dargestellt und nachstehend erläutert.

Es zeigen:

Fig. 1 die Schaltskizze für die Übertragung der Antriebsleistungen von vier Motoren (jeweils 2 Motoren achsversetzt) auf zwei Propeller mit Nebenabtriebsmöglichkeiten, wobei sämtliche Schaltkupplungen als Lastschaltkupplungen ausgeführt und die Kegelräder der Verbindungswelle zwischen den beiden Getriebeblöcken mit den Schaltritzeln verbunden sind,

Fig. 1A die Anordnung gemäß Fig. 1, jedoch mit jeweils 2 Motoren zur Leistungsabgabe auf jeweils eine Antriebswelle,

Fig. 2 die Anordnung gemäß Fig. 1, jedoch mit im Stillstand schaltbaren Kupplungen an den Getriebeschaltstufen,

Fig. 2A wie Fig. 1A, jedoch mit im Stillstand schaltbaren Kupplungen an den Getriebeschaltstufen,

Fig. 3 ein Verstell-Propellerdiagramm zur Darstellung der gegenseitigen Abhängigkeit von Motorenleistung, Propellerdrehzahl, Propellersteigung und Schiffsgeschwindigkeit, wobei in dem Diagramm das Motorenkennfeld einer Doppelschraubenanlage eingetragen ist, deren Propeller jeweils von bis zu vier Motoren angetrieben werden,

Fig. 4 ein Verstell-Propellerdiagramm gemäß Fig. 3, in welches das Motorenkennfeld einer Doppelschraubenanlage eingezeichnet ist, bei welcher jeweils zwei Motoren auf zwei Propeller wirken,

Fig. 5 ein Verstell-Propellerdiagramm gemäß Fig. 3 und 4, in welches das Motorenkennfeld einer Doppelschraubenanlage eingezeichnet ist, bei welcher beide Propeller von einem Motor bei ökonomischer Propellerdrehzahl angetrieben werden, d. h., es wird eine Einsparung der installierten Leistung von ca. 10% erreicht bzw. bei gleicher Geschwindigkeit eine ca 30% geringere Leistung investiert,

Fig. 6 bis 9 tabellarische Übersichten für Fahrmöglichkeiten mit einer Antriebsanlage gemäß Figuren 1, 2, 1A und 2A,

Fig. 10 eine Antriebsanordnung wie Fig. 1, jedoch sind die Kegelräder der Verbindungswelle zwischen den Getriebeblöcken mit den Wellen der Schaltstufen verbunden,

Fig. 10A eine Antriebsanordnung wie Fig. 1A, jedoch sind die Kegelräder der Verbindungswelle zwischen den Getriebeblöcken mit den Wellen der Schaltstufen verbunden,

Fig. 11 eine Antriebsanordnung wie Fig. 2, jedoch sind die Kegelräder der Verbindungswelle zwischen den Getriebeblöcken mit den Wellen der Schaltstufen verbunden,

Fig. 11A eine Antriebsanordnung wie Fig. 2A, jedoch sind die Kegelräder der Verbindungswelle zwischen den Getriebeblöcken mit den Wellen der Schaltstufen verbunden,

Fig. 12 und 13 tabellarische Übersichten für Fahrmöglichkeiten mit Antriebsanordnungen gemäß Fig. 10, 11, 10A und 11A,

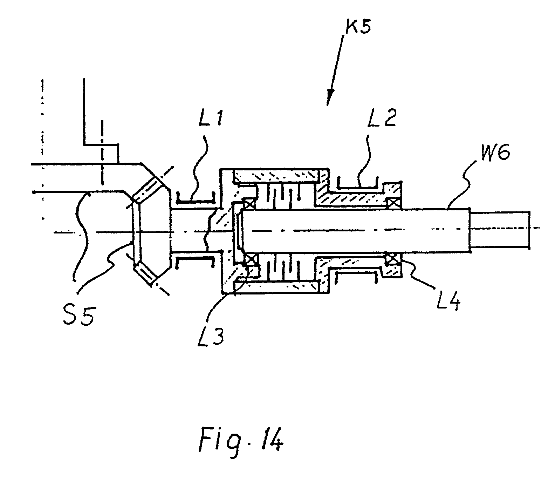

Fig. 14 eine Prinzipskizze für die Schaltkupplungen der Verbindungswelle in größerem Maßstab,

Fig. 15 für eine Anlage mit einem Motor auf jeder Propellerwellenaußenseite ein Verstellpropellerdiagramm der gegenseitigen Abhängigkeit von Motorenleistung, Propellerleistung und Drehzahl, Propellersteigung und Schiffsgeschwindigkeit, wobei in dem Diagramm die jeweiligen Kennfelder der installierten Gesamt- und Paarleistungen der Vater- und Sohn-Motoren einer konventionellen Doppelschraubenanlage eingezeichnet sind,

Fig. 16 ein Verstellpropellerdiagramm gemäß Fig. 15, in welcher das Motorenkennfeld einer Doppelschraubenanlage eingezeichnet ist, bei welcher beide Propeller von einem Vater-Motor bei ökonomischer Propellerdrehzahl angetrieben werden, d. h. es wird eine Einsparung der installierten Leistung von ca. 10 % erreicht bzw. bei gleicher Schiffsgeschwindigkeit eine um ca. 30 % geringere Leistung investiert,

Fig. 17 ein Verstellpropellerdiagramm gemäß Fig. 16, bei welchem beide Propeller von einem Sohn-Motor bei ökonomischer Propellerdrehzahl angetrieben werden, d. h. es wird eine Einsparung der installierten Leistung von 12 % erreicht bzw. bei gleicher Schiffsgeschwindigkeit eine um ca. 38 % geringere Leistung investiert,

Fig. 18 die Schaltskizze für die Übertragung der Antriebsleistungen von vier Motoren mit einer konventionellen Motorenanordnung auf zwei Propeller mit Nebenabtriebsmöglichkeiten, wobei sämtliche Schaltkupplungen als Lastschaltkupplungen ausgeführt und die Kegelräder der Verbindungswelle zwischen den beiden Getriebeblöcken mit den Schaltritzeln verbunden sind,

Fig. 19 eine Schaltskizze gemäß Fig. 18, jedoch mit zusätzlichen, den außenliegenden Motoren zugeordneten Primär-Nebenabtrieben für den Antrieb von Pumpen oder Generatoren,

Fig. 20 eine Anordnung gemäß Fig. 19, jedoch mit im Stillstand schaltbaren Kupplungen an den Getriebeschaltstufen,

Fig. 21 und 22 tabellarische Übersichten für Fahrmöglichkeiten mit einer Antriebsanlage gemäß Figuren 18 und 20,

Fig. 23 eine Antriebsanordnung wie Fig. 18, jedoch sind die Kegelräder der Verbindungswelle zwischen den Getriebeblöcken mit den Wellen der Schaltstufen verbunden,

Fig. 24 eine Anordnung wie Fig. 19, bei der jedoch die Kegelräder der Verbindungswelle zwischen den Getriebeblöcken mit den Wellen der Schaltstufen verbunden sind,

Fig. 25 eine Antriebsanordnung wie Fig. 20, wobei jedoch die Kegelräder der Verbindungswelle zwischen den Getriebeblöcken mit den Wellen der Schaltstufen verbunden sind,

Fig. 26 und 27 tabellarische Übersichten für Fahrmöglichkeiten mit Antriebsanordnungen gemäß Fig. 23 und 25.

Die in den Figuren der Zeichnungen verwendeten Bezugzeichen bedeuten im Einzelnen:

| | |
|---|---|
| M$_I$, M$_{II}$ | Antriebsmotoren der Backbordseite |
| M$_{III}$, M$_{IV}$ | Antriebsmotoren der Steuerbordseite |
| K$_1$, K$_2$ | Schaltkupplungen der Antriebsmotoren |
| K$_3$, K$_4$ | Schaltkupplungen der Getriebeschaltstufen (in Fig. 2, 11, 20 und 25 als im Stillstand schaltbare Kupplung ausgeführt) |
| K$_5$ | Schaltkupplungen der Verbindungswelle |
| K$_6$, K$_7$ | nicht schaltbare Ausgleichskupplungen an den Arbeitsmaschinen (Hilfsmaschinen) bzw. Antriebsmaschinen |
| W$_1$, W$_2$ | Motorabtriebswellen |
| W$_3$ | Propellerwellen |
| W$_4$, W$_5$, W$_6$ | Kupplungshohlwellen |
| W$_7$ | Welle der Schaltstufe |
| W$_8$ | Verbindungswelle zwischen den Getriebeblöcken der Backbord- und Steuerbordseite |
| S$_1$ | Getriebestufe der Propellerwelle |
| S$_2$ | Verbindungsstufe zwischen den Kupplungen K$_2$, K$_3$ bzw K$_3$, K$_4$ |
| S$_3$ | Verbindungsstufe zwischen den Motorabtriebswellen W$_1$, W$_2$ bzw. zwischen der Antriebswelle W$_2$, und Welle W$_7$ der Schaltstufe |
| S$_4$ | Verbindungsstufe zwischen den Motorenabtriebswellen W$_1$, W$_2$ und einer Nebenabtriebswelle (Generator G$_1$) |
| S$_4$, S$_5$ | Kegelradschaltstufe zur Verbindung der Getriebeblöcke mit der Verbindungswelle W$_8$ |
| G$_1$ | Stromgeneratoren im Nebenantrieb |
| G$_2$ | Stromgenerator in der Verbindungswelle W$_8$ |
| L$_1$, L$_2$ | Traglager der Verbindungswelle |
| L$_3$, L$_4$ | Kupplungslager der Schaltkupplung K$_5$ |

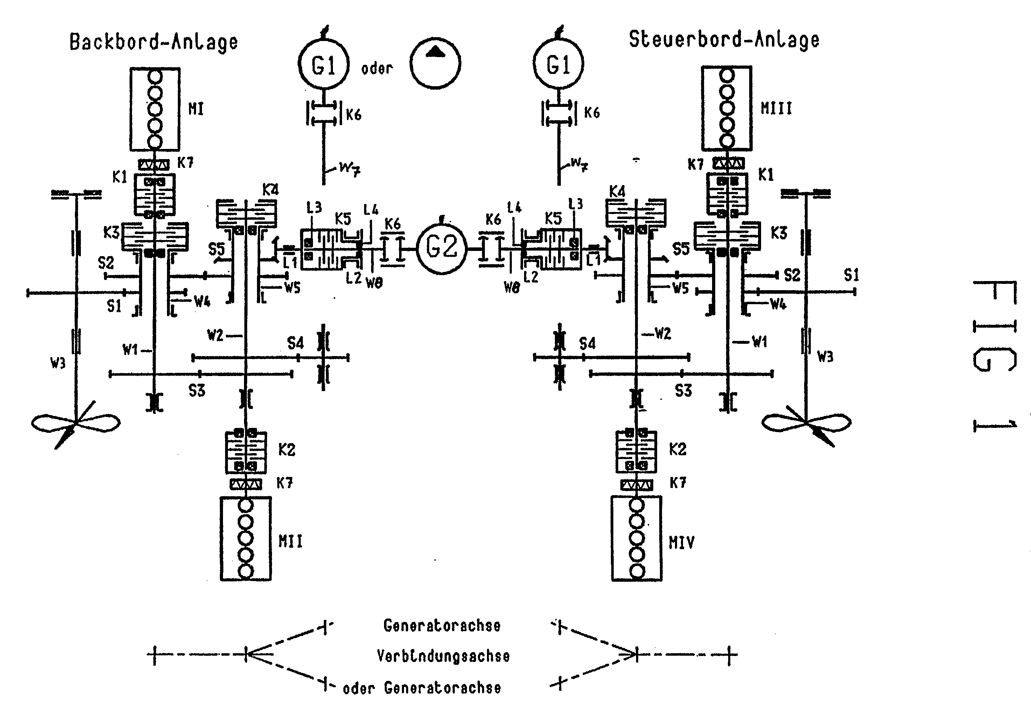

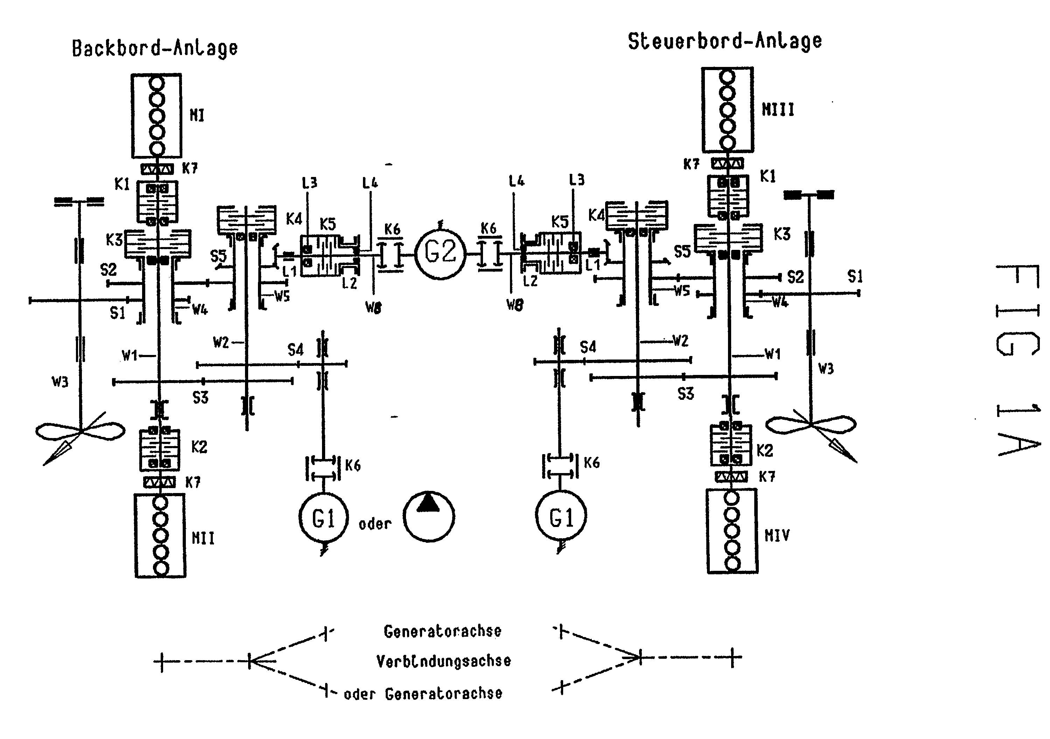

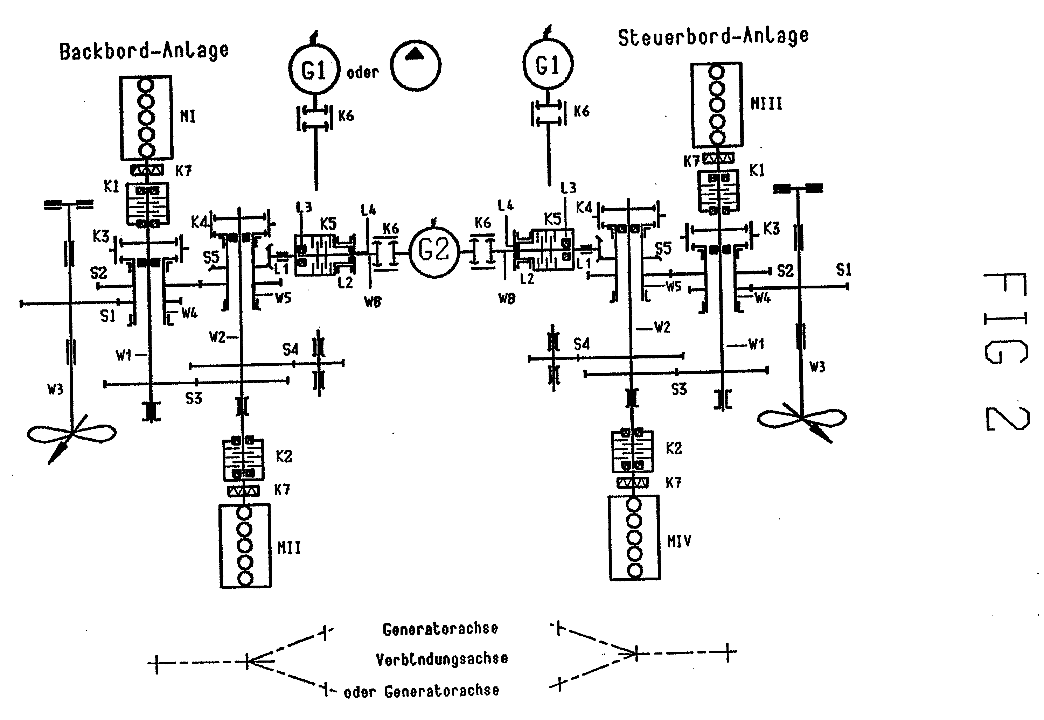

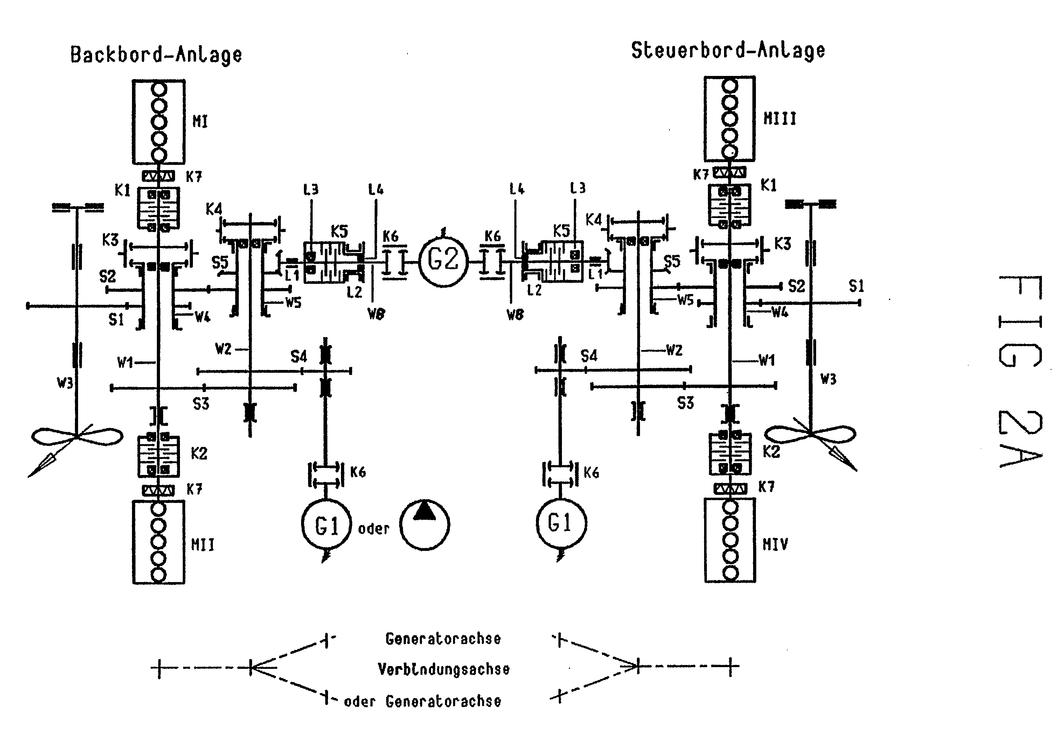

Bei den Ausführungsbeispielen gemäß Figuren 1, 2, 1A und 2A besteht die gesamte Antriebsanlage aus zwei spiegelbildlich angeordneten Getriebeblöcken zwischen den Propellerwellen W$_3$. Die gesamtinstallierte Leistung ist auf die vier Antriebsmotoren M$_I$ - M$_{IV}$ verteilt.

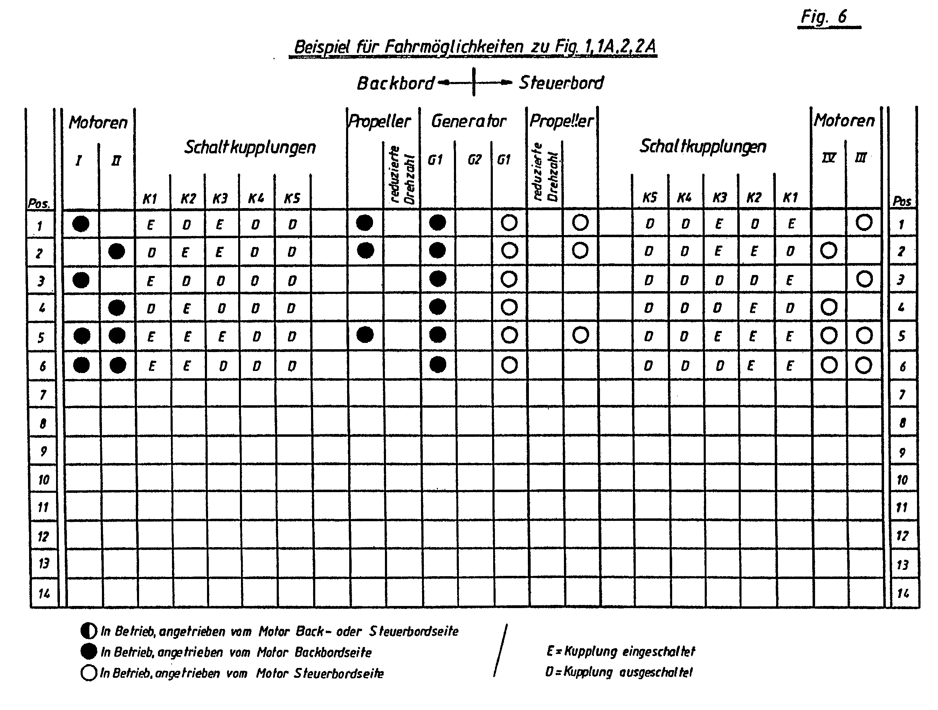

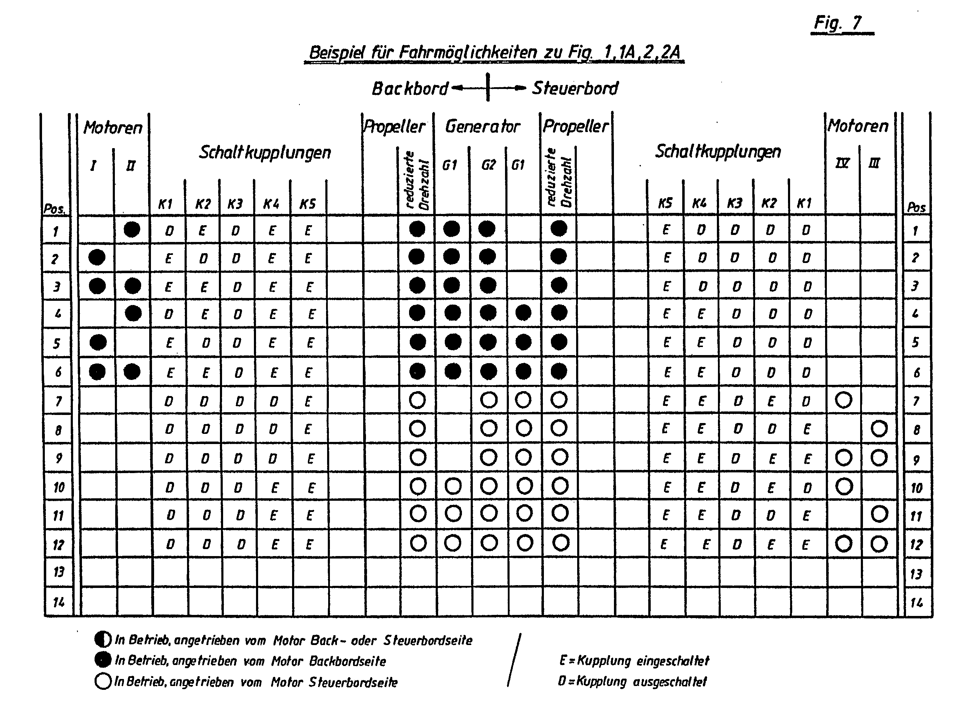

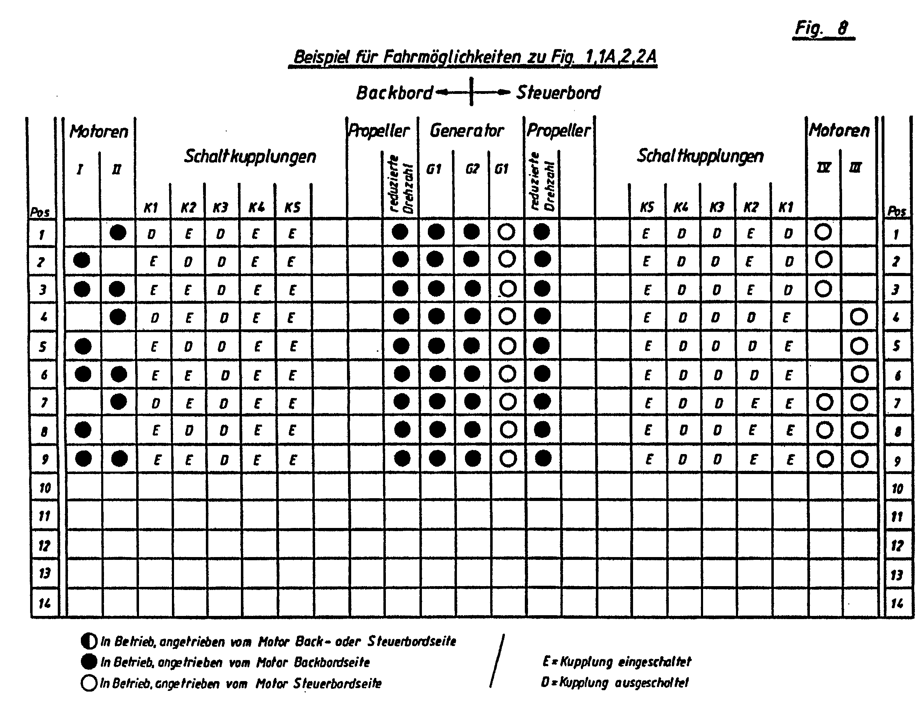

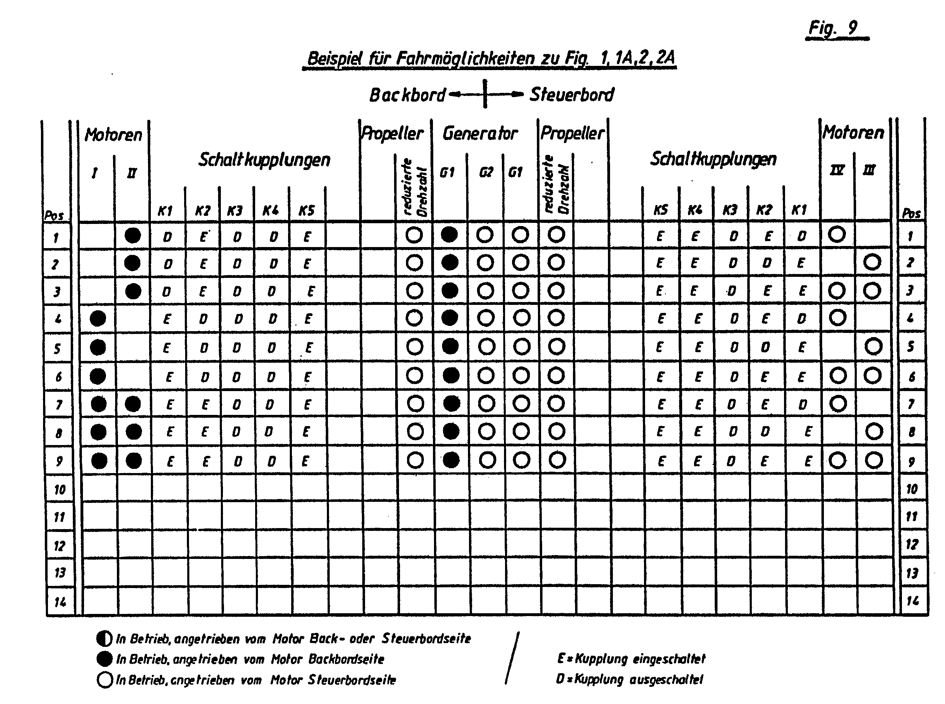

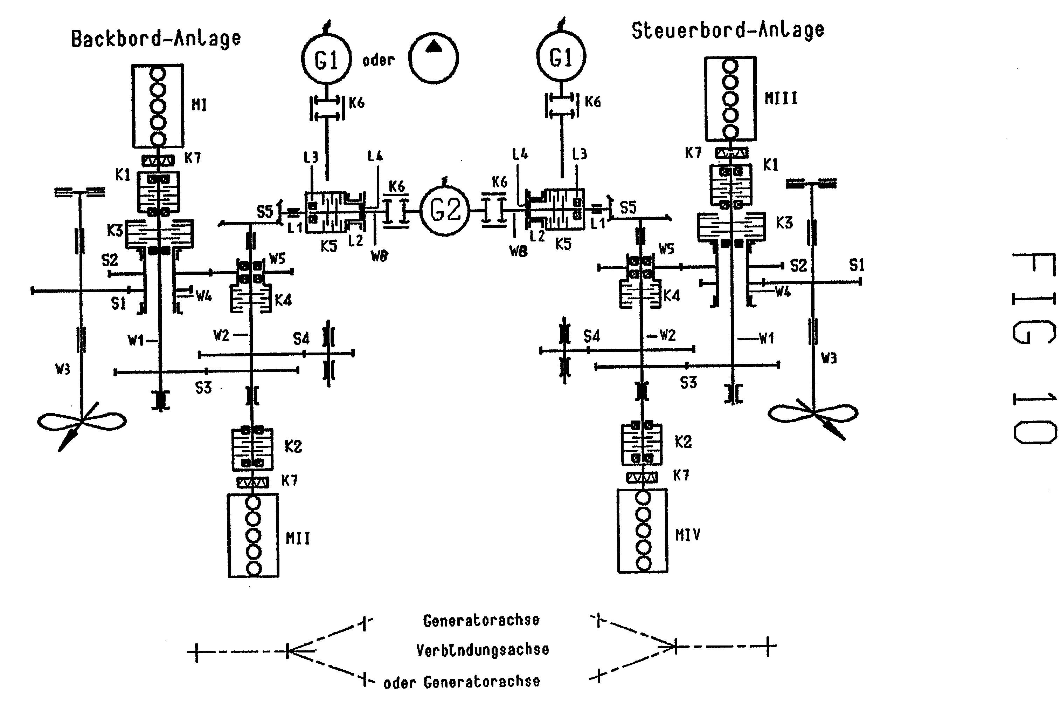

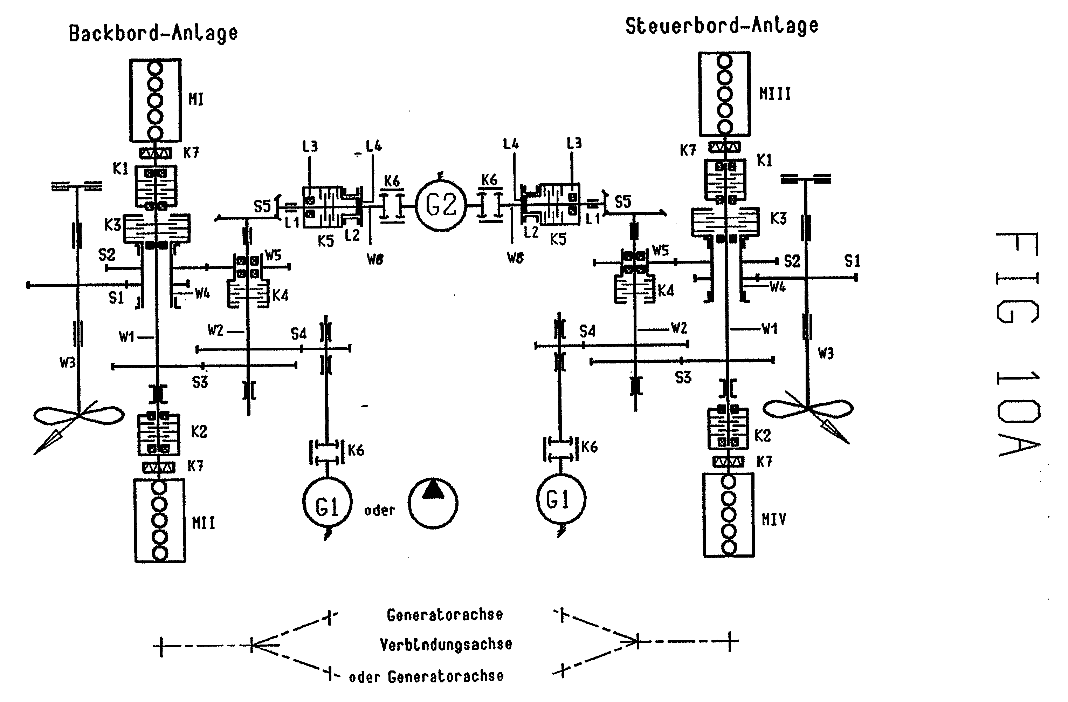

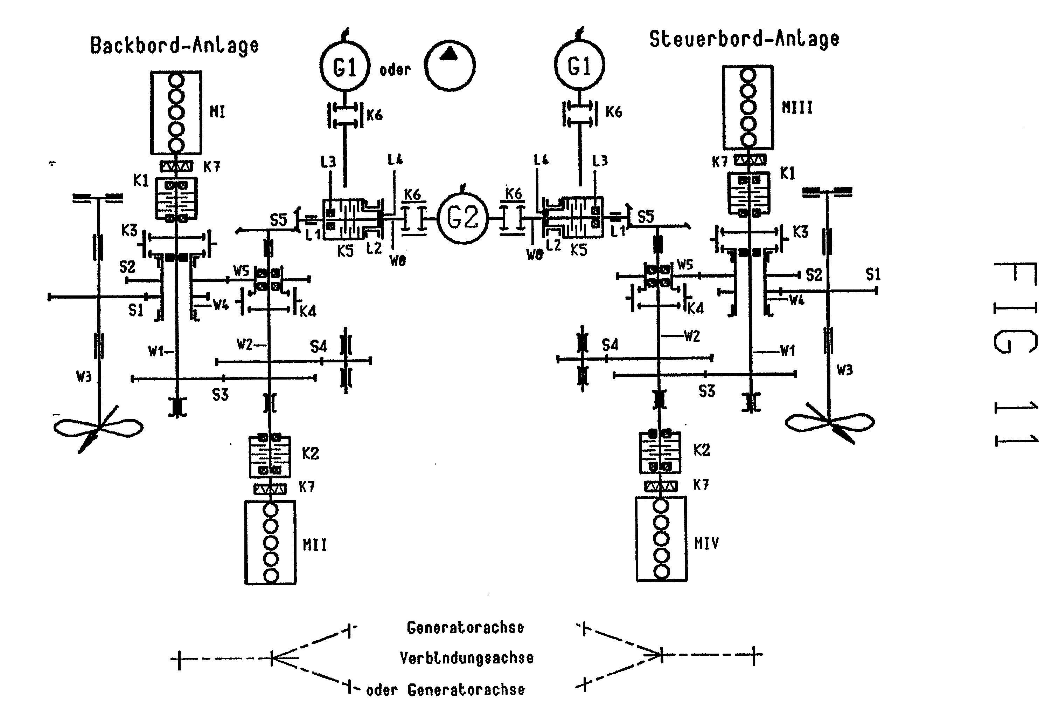

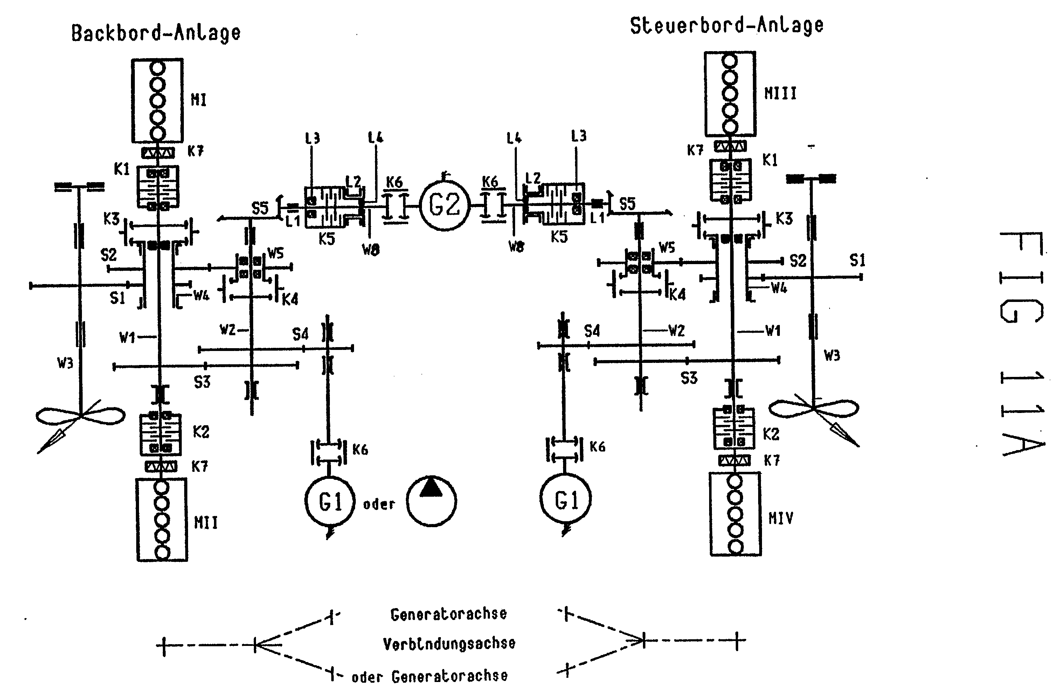

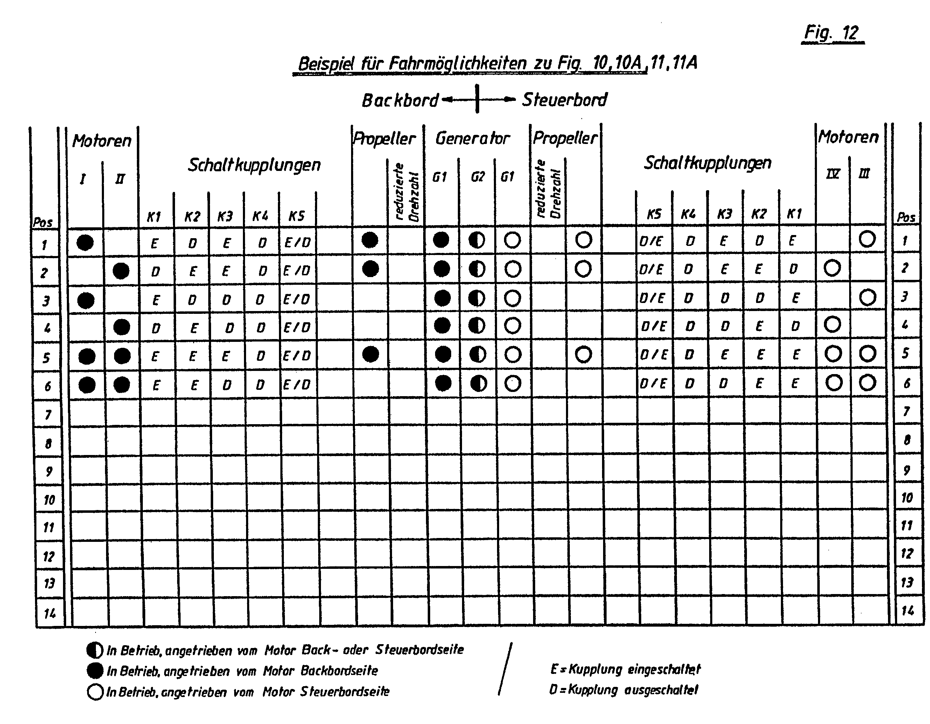

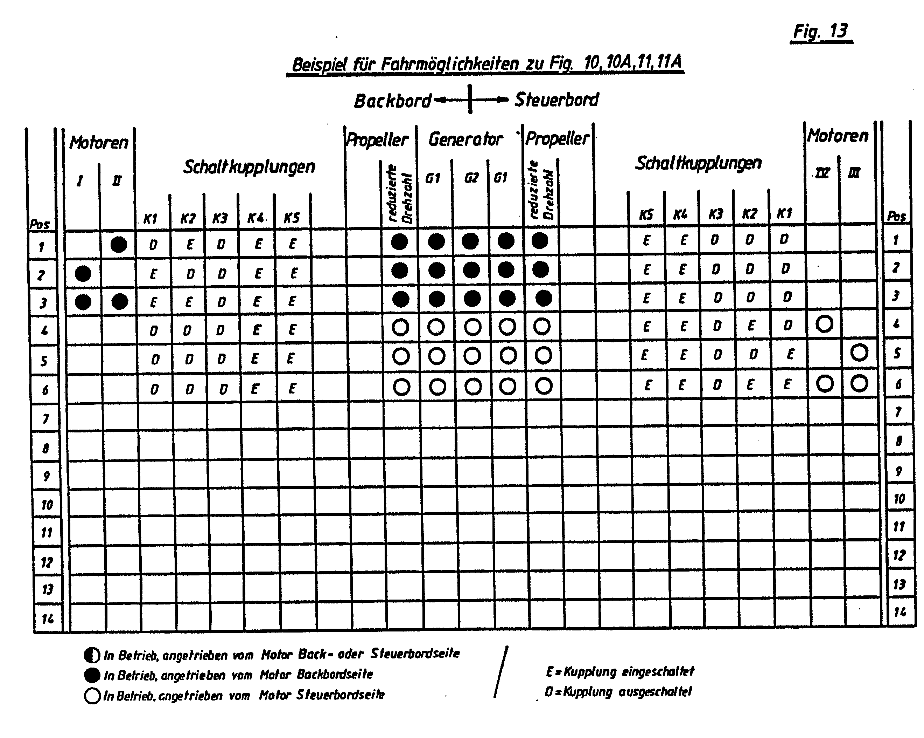

Die Getriebeblöcke sind miteinander durch eine Verbindungswelle W$_8$ verbunden. Zwischen der Welle W$_8$ und den Getriebeblöcken sind Lastschaltkupplungen K$_5$ eingesetzt. Sie sind als Lamellenschaltkupplungen ausgeführt und zeigen eine besondere kompakte Bauweise, da die Kupplungselemente jeweils zwischen den Wellenlagern L$_1$ und L$_2$ angeordnet sind. Der dadurch gewonnene Raum kann ausgenutzt werden für einen Generator G$_2$, der mit beidseitig angeordneten, nichtschaltbaren Ausgleichskupplungen in die Welle W$_8$ eingesetzt ist. Die Getriebeblöcke umfassen weiterhin ein zweistufiges Schaltgetriebe, das über die Kupplungen K$_2$ und K$_3$ bzw. K$_3$ und K$_4$ geschaltet wird und unterschiedliche Propellerdrehzahlen bei gleicher Motordrehzahl ermöglicht. Die Kraftverläufe eines Antriebsmotors allein oder in Kombination mit den übrigen Motoren zum Antrieb jeweils beider Propeller und/oder der Generatoren, sind in den Figuren 6 bis 9 übersichtlich dargestellt. Die Schaltmöglichkeiten und entsprechende Kraftverläufe für die Antriebsanlagen mit Kupplungsanordnungen gemäß Figuren 10, 10A, 11 und 11A können den Tabellen der Figuren 12 und 13 entnommen werden.

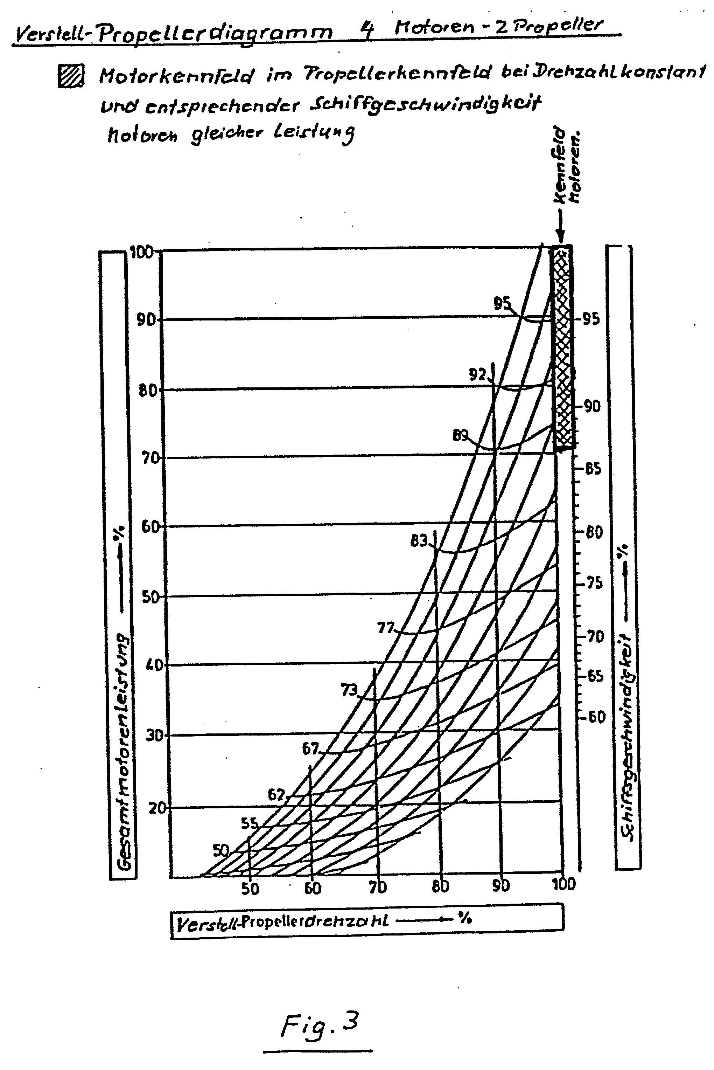

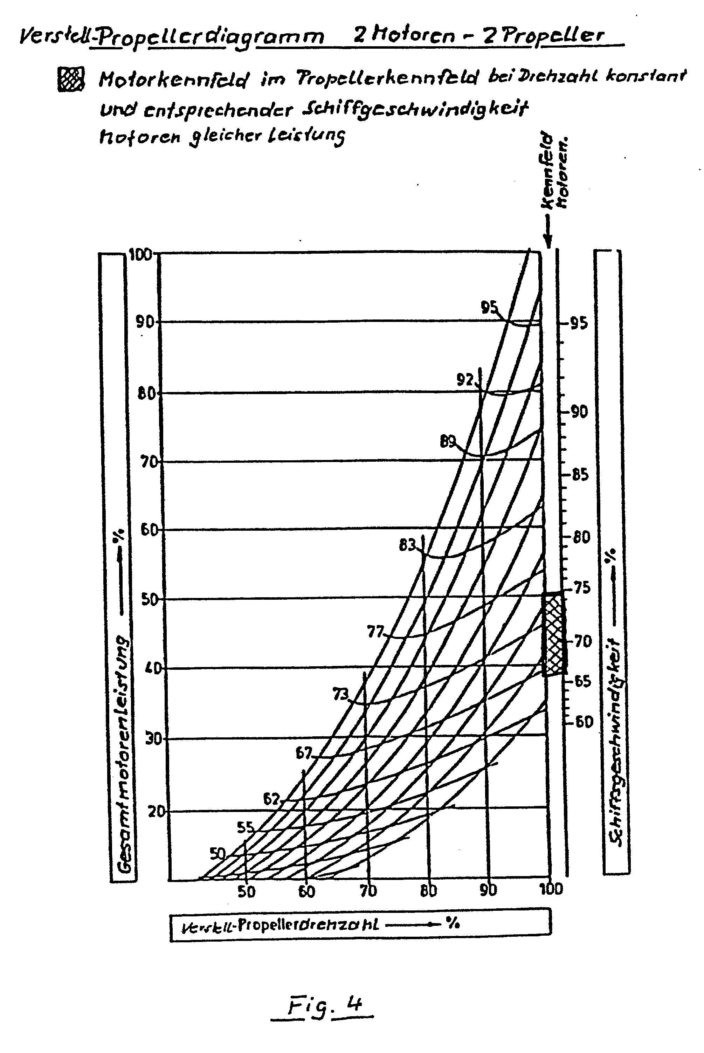

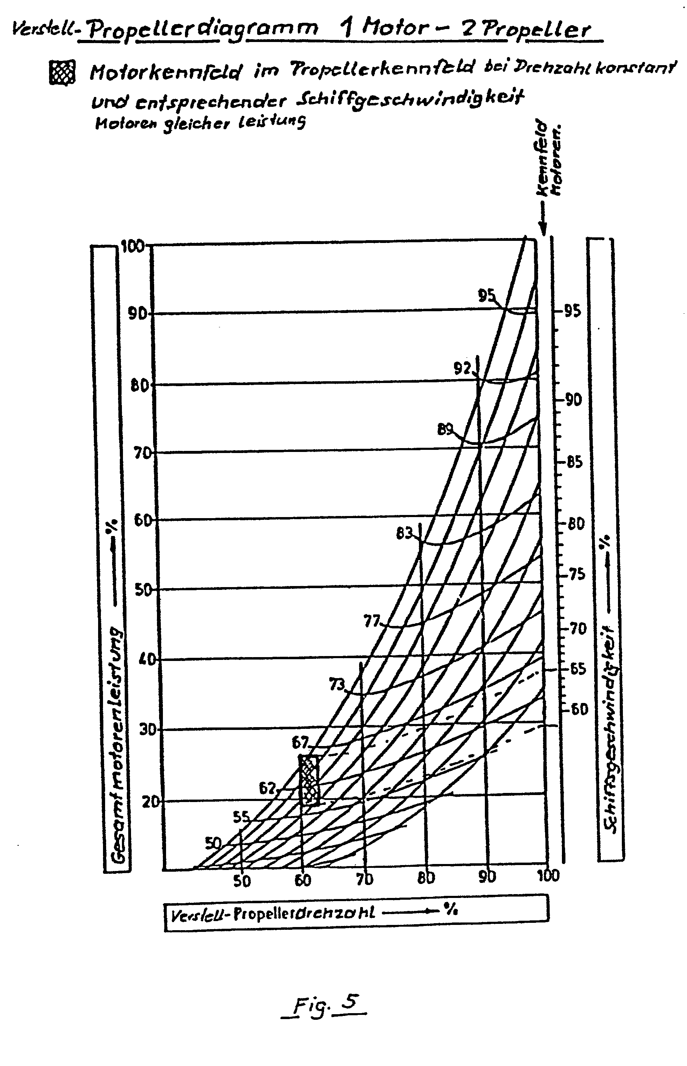

Anhand der Propellerkennfelder, dargestellt in den Figuren 3 bis 5, können für verschiedene Leistungsaufnahmen der beiden Verstellpropeller bzw. für unterschiedliche Fahr geschwindigkeiten die wirtschaftlichsten Maschinenkombinationen mit Leistungsaufteilungen unter Berücksichtigung der Blattsteigungen der Propeller bestimmt werden, so daß die Anlage über das gesamte Fahrprofil äußerst energiesparend gefahren werden kann.

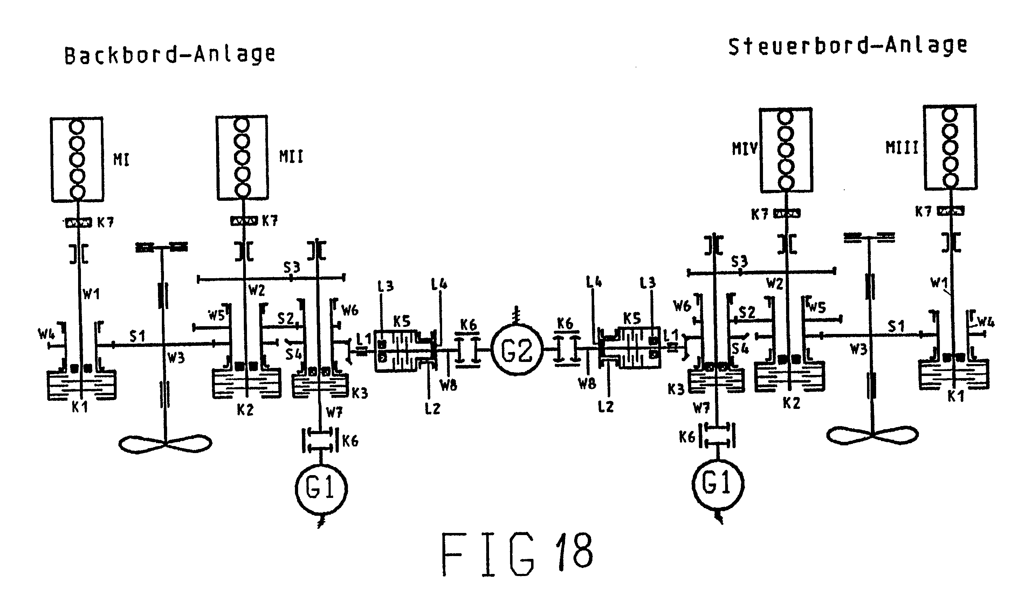

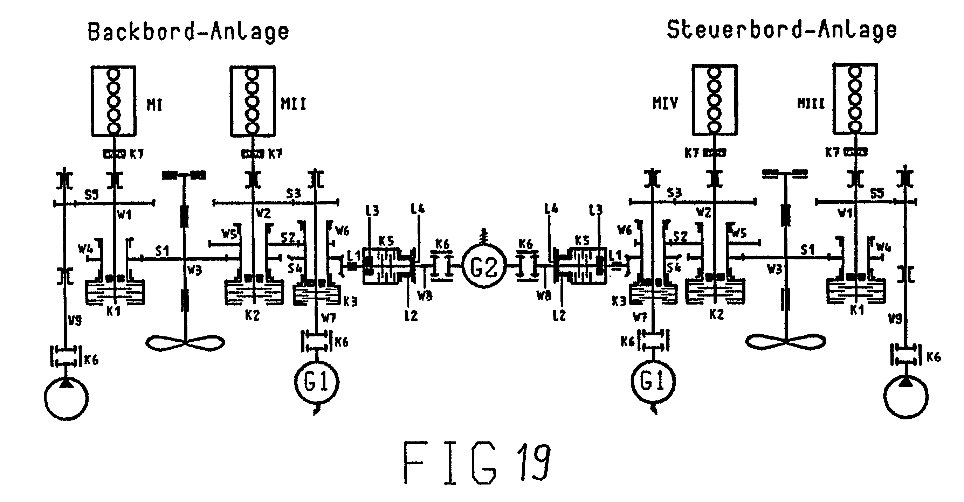

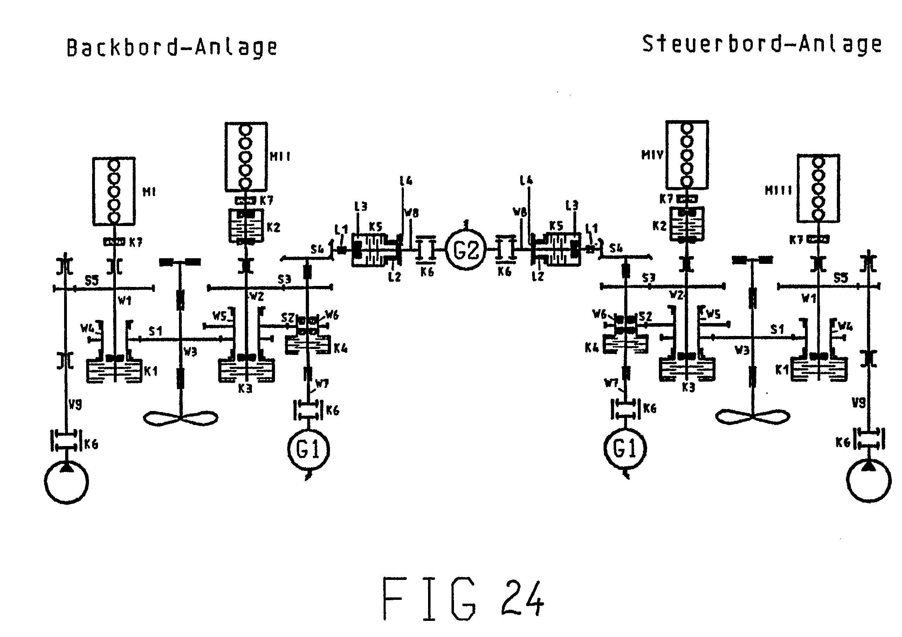

Bei den Ausführungsbeispielen gemäß Figuren 18, 19, 20 und 23, 24 und 25 besteht die gesamte Antriebsanlage aus zwei spiegelbildlich angeordneten Getriebeblöcken auf den Innenseiten und z.T. auf den Außenseiten der Propellerwellen W$_3$. Die gesamte installierte Leistung ist auf die vier Antriebsmotoren M$_I$ - M$_{IV}$ verteilt, von welchen jeweils ein Motor M$_I$ bzw. M$_{II}$ auf den zugehörigen Propellerwellenaußenseiten angeordnet sind.

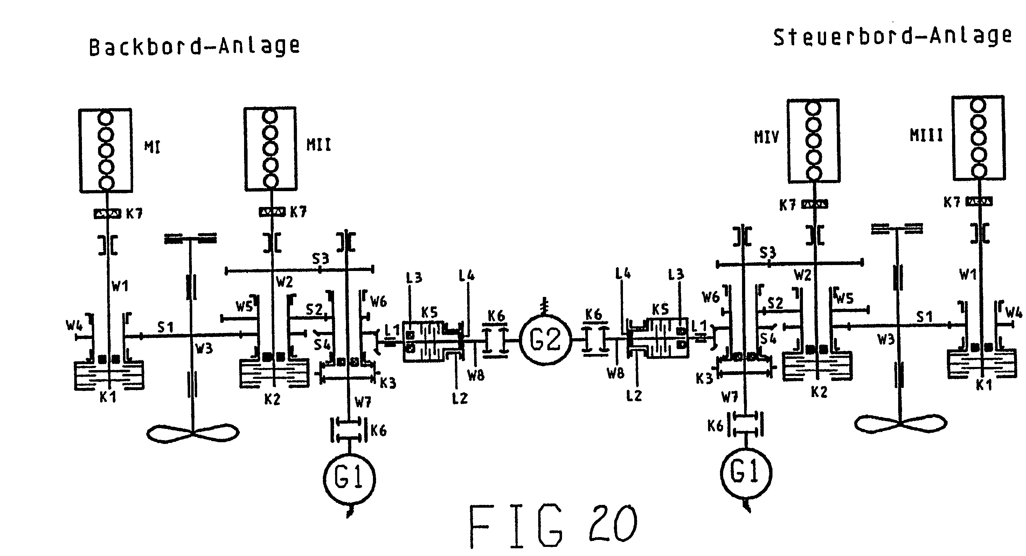

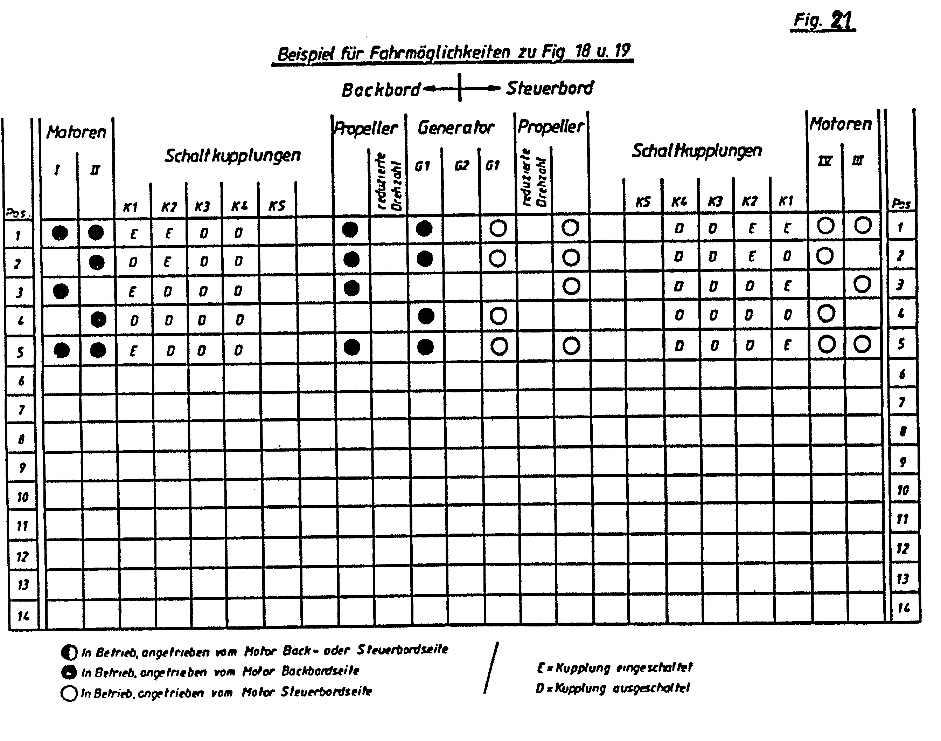

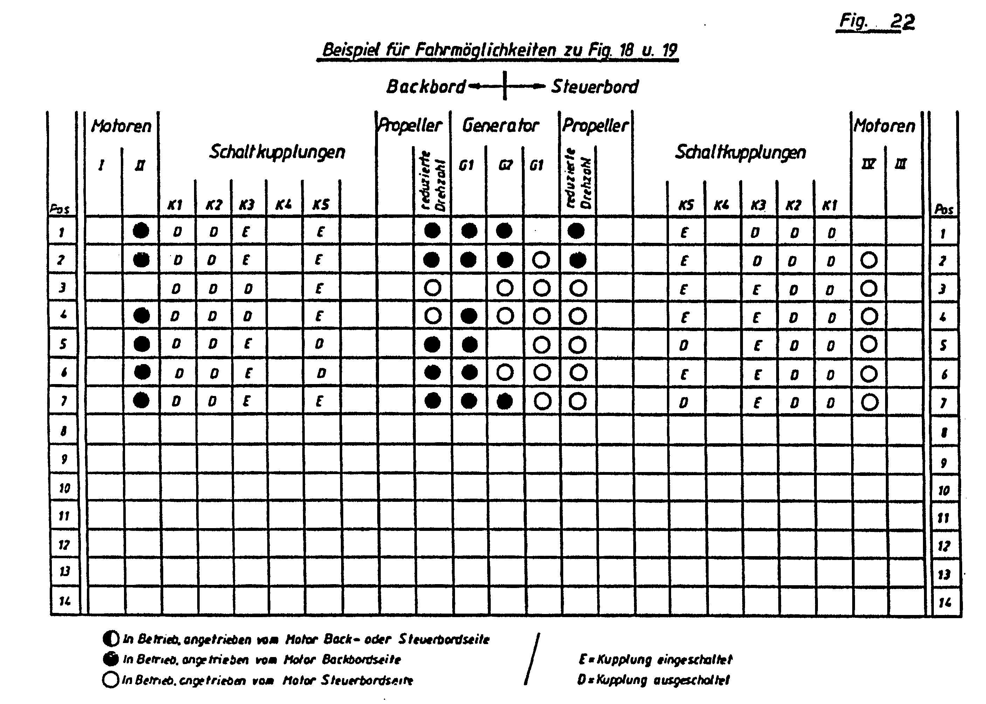

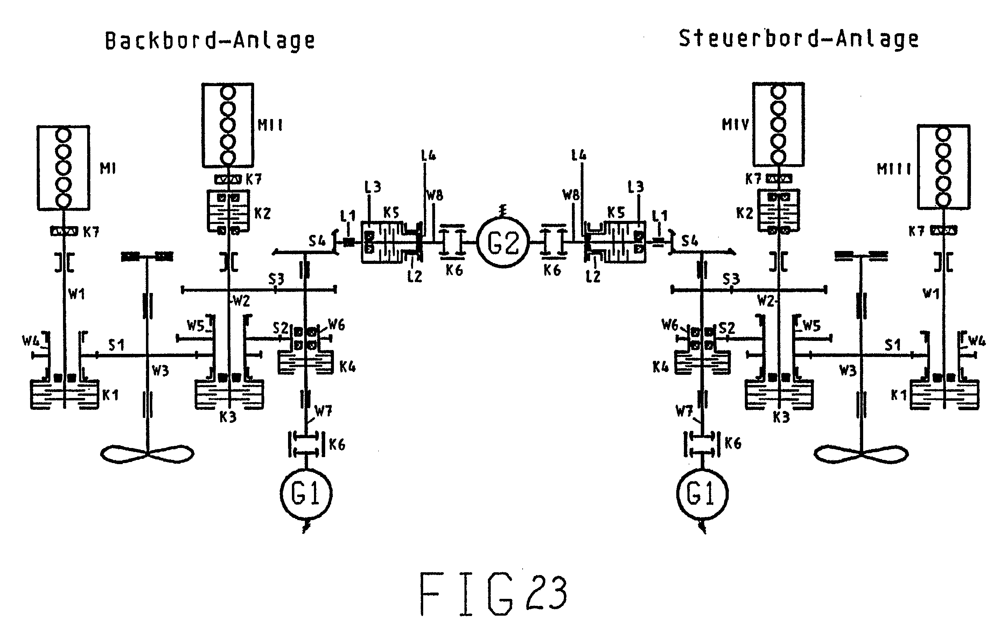

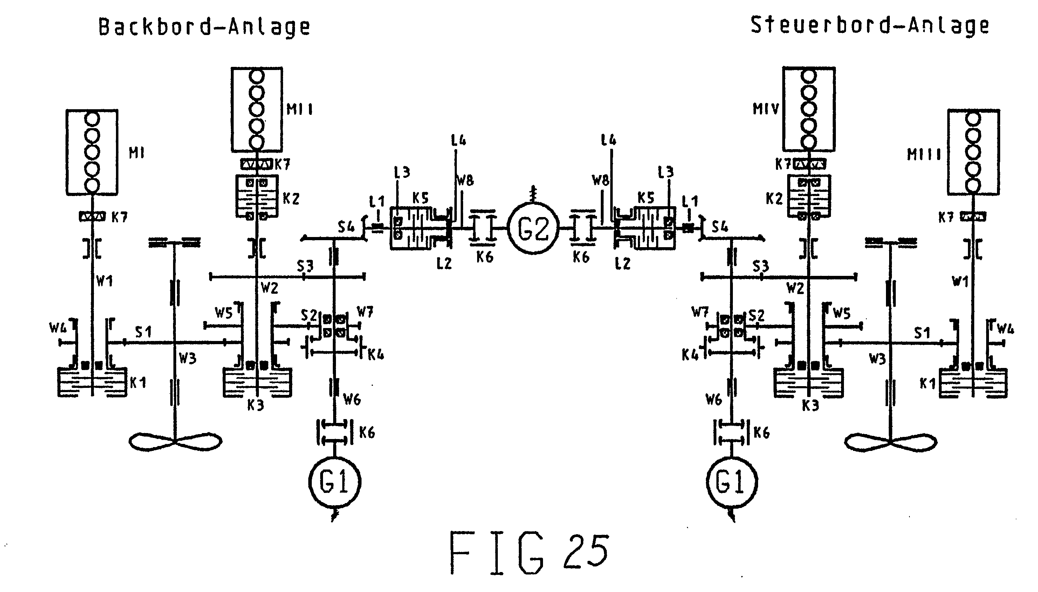

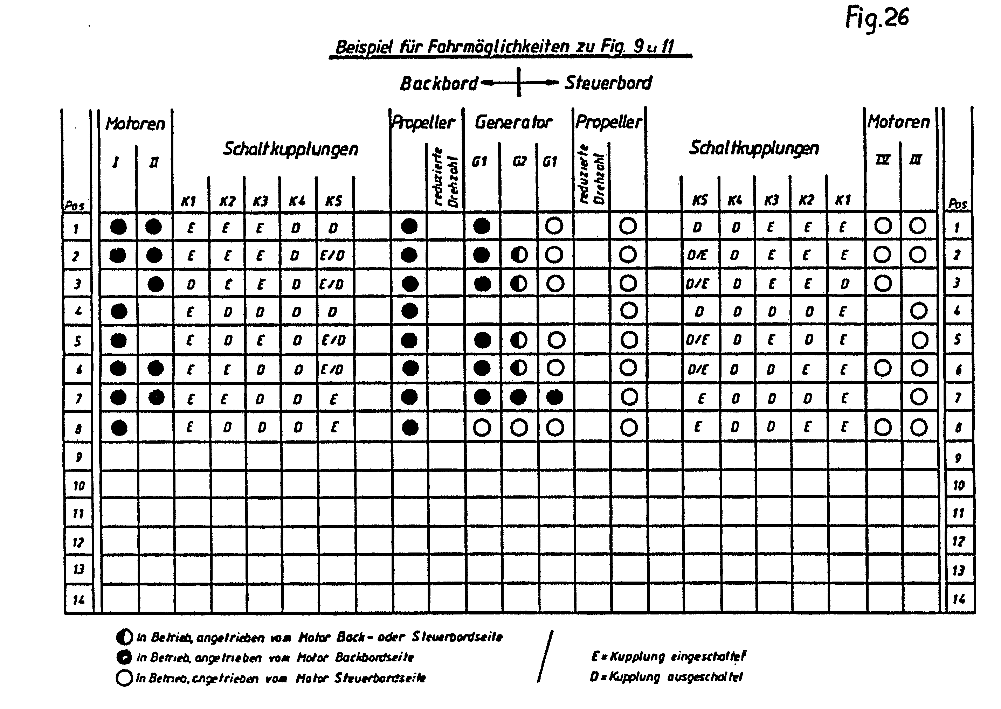

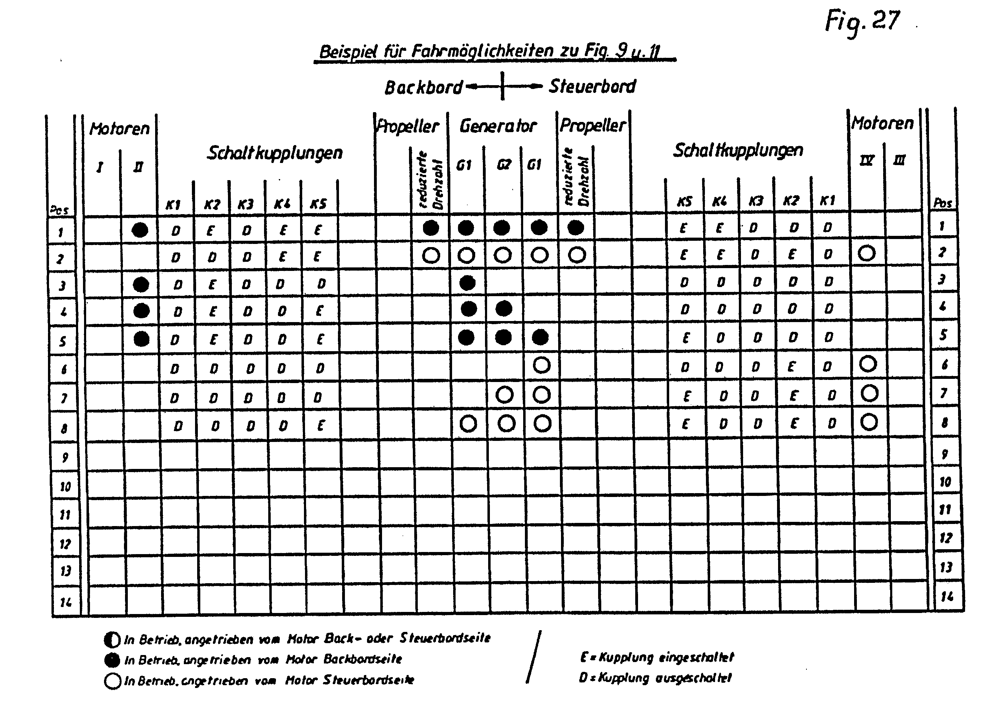

Auch hierfür sind die Kraftverläufe eines Antriebsmotors allein oder in Kombination mit den übrigen Motoren zum Antrieb jeweils beider Propeller und/oder der Generatoren gemäß den Fig. 18 und 20 in den Tabellen der Figuren 21 und 22 übersichtlich dargestellt. Die Schaltmöglichkeiten und entsprechenden Kraftverläufe für die Antriebsanlagen mit Kupplungsanordnungen gemäß Figuren 23 und 25 können den Tabellen der Figuren 26 und 27 entnommen werden.

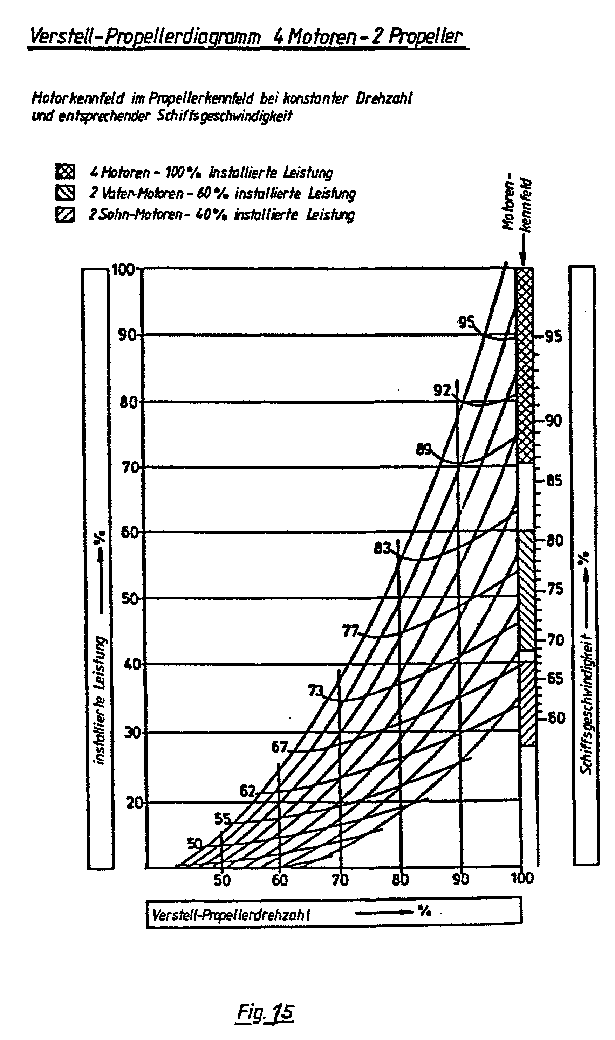

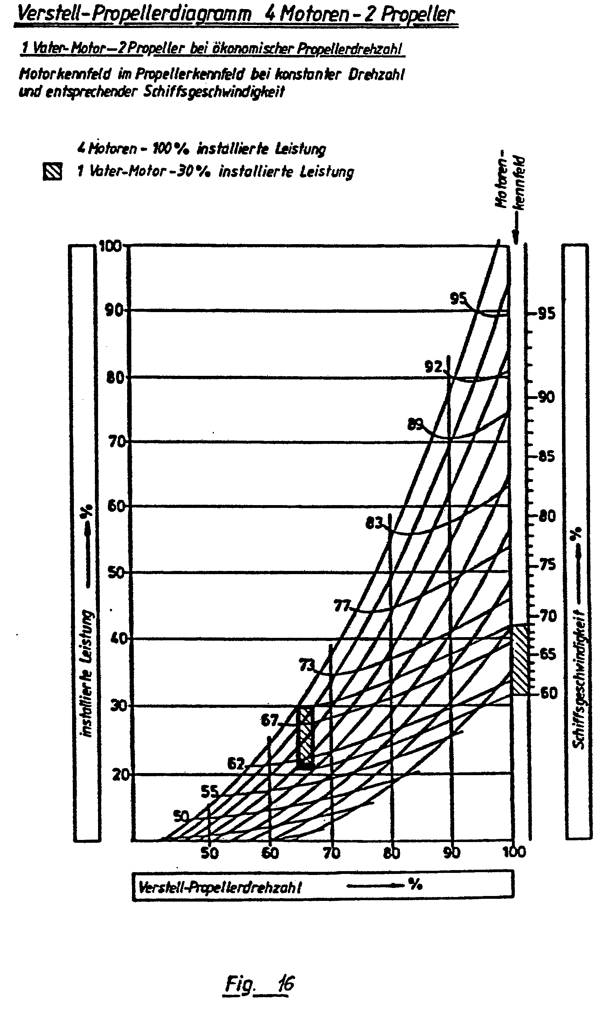

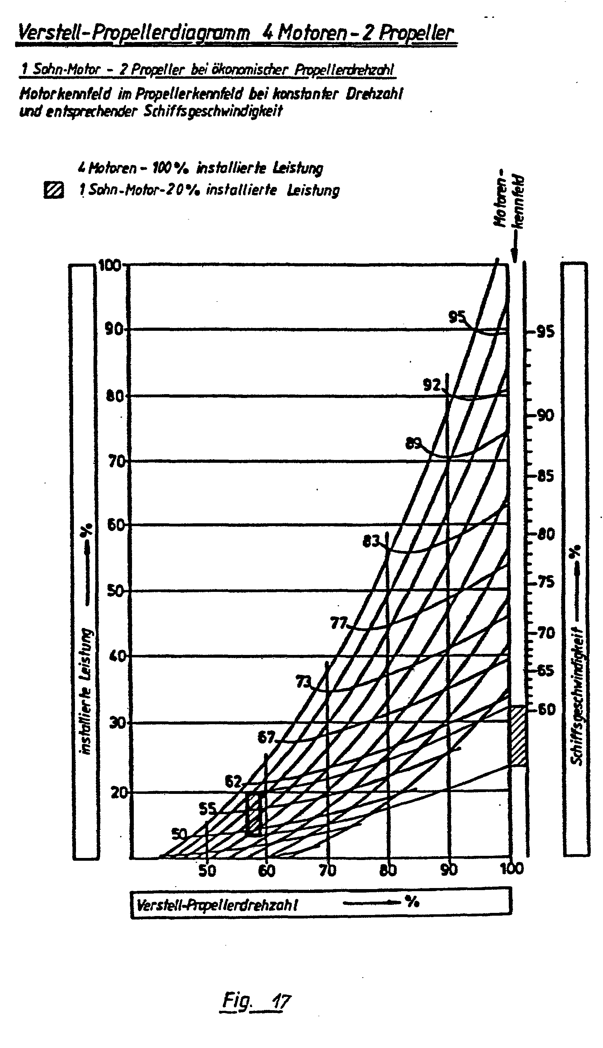

Anhand der Propellerkennfelder, dargestellt in den Figuren 15 bis 17 können wieder die wirtschaftlichsten Maschinenkombinationen mit Leistungsaufteilungen unter Berücksichtigung der Blattsteigungen bei bestem Wirkungsgrad der Propeller für unterschiedliche Fahrgeschwindigkeiten bestimmt werden, so daß auch die Anlagen nach den Fig. 18 bis 20 und 23 bis 25 über das gesamte Fahrprofil äußerst energiesparend gefahren werden können.

## Patentansprüche

1. Schiffsantriebsanlage mit mehr als zwei Motoren zum Antrieb zweier Verstellpropeller und wenigstens eines Generators, gekennzeichnet durch zu- und abschaltbare Einrichtungen zur Übertragung der Antriebsenergie eines oder mehrerer Motoren (M$_I$, M$_{II}$, M$_{III}$, M$_{IV}$) einer Schiffsseite auf beide Propeller und/oder den bzw. die Generatoren, wobei jedem Propeller ein Getriebeblock mit zwei Antriebswellen (W$_1$, W$_2$), eine Abtriebswelle (W$_3$) für den Propeller und eine oder mehrere Abtriebswellen (W$_7$, W$_8$) für Nebenantriebe zugeordnet sind, welche durch eine rechtwinklig zu den Antriebswellen angeordnete zu- und abschaltbare Verbindungswelle (W$_6$, W$_8$) miteinander verbunden sind.

2. Schiffsantriebsanlage nach Anspruch 1, dadurch gekennzeichnet, daß die Propellerdrehzahl bei Motorennenndrehzahl über wenigstens eine Schaltstufe auf ökonomische Drehzahlen reduzierbar ist.

3. Schiffsantriebsanlage nach den Ansprüchen 1 oder 2, dadurch gekennzeichnet, daß die Verbin-

dungswelle ($W_6$, $W_8$) über Kegelräder mit den Getriebeblöcken verbunden ist.

4. Schiffsantriebsanlage nach einem oder mehreren der Ansprüche 1 bis 3, dadurch gekennzeichnet, daß die Motoren ($M_I$, $M_{II}$, $M_{III}$, $M_{IV}$) auf der der Schiffsmitte zugewandten Seite der jeweils zugehörigen Propellerwelle ($W_3$) angeordnet sind.

5. Schiffsantriebsanlage nach einem oder mehreren der Ansprüche 1 bis 3, dadurch gekennzeichnet, daß auf jeder Propellerwellenaußenseite ein Motor ($M_I$, $M_{III}$) mit direktem Eingriff in das Abtriebswellengetrieberad der zugehörigen Getriebestufe ($S_1$) angeordnet ist.

6. Schiffsantriebsanlage nach einem oder mehreren der Ansprüche 1 bis 5, dadurch gekennzeichnet, daß in die Verbindungswelle ein Generator ($G_2$) eingesetzt ist.

7. Schiffsantriebsanlage nach einem oder mehreren der Ansprüche 1 bis 6, dadurch gekennzeichnet, daß in den Antriebswellen ($W_1$, $W_2$) der Getriebeblöcke sowie zwischen den Getriebeschaltstufen innerhalb der Getriebeblöcke und innerhalb der Verbindungswelle ($W_6$, $W_8$) der Getriebeblöcke Schaltkupplungen ($K_1$, $K_2$, $K_3$, $K_4$, $K_5$) angeordnet sind.

8. Schiffsantriebsanlage nach einem oder mehreren der Ansprüche 1 bis 7, dadurch gekennzeichnet, daß ein oder alle Motoren jeder Propellerseite mit den dieser Seite zugeordneten Generatoren sowohl bei abgeschalteten als auch bei eingeschalteten Propellern zum Antrieb verbindbar sind.

9. Schiffsantriebsanlage nach einem oder mehreren der Ansprüche 1 bis 8, dadurch gekennzeichnet, daß beim Antrieb beider Propeller durch einen Motor die übrigen Motoren des anderen Getriebeblocks mit den ihnen zugeordneten Generatoren verbindbar sind.

10. Schiffsantriebsanlage nach einem oder mehreren der Ansprüche 1 bis 8, dadurch gekennzeichnet, daß ein oder alle Motoren eines Getriebeblccks mit den Generatoren und/oder Propellern beider Getriebeblöcke verbindbar sind.

## Claims

1. Ship's propulsion system comprising more than two motors for the driving of two variable-pitch propellers and at least one generator, characterised by connectable and disconnectable devices for the transmission of the driving power of one or more motors ($M_I$, $M_{II}$, $M_{III}$, $M_{IV}$) of one side of the ship to both propellers and/or to the generator or the generators, wherein there is associated with each propeller a transmission block comprising two drive shafts ($W_1$, $W_2$), a take-off shaft ($W_3$) for the propeller and one or more take-off shafts ($W_7$, $W_8$) for auxiliary drives, which are connected to each other by a connectable and disconnectable connecting shaft ($W_6$, $W_8$) arranged perpendicular to the drive shafts.

2. Ship's propulsion system according to claim 1, characterised in that the propeller speed of rotation, with motors at rated speed, is reducible to economic speeds of rotation by means of at least one switching stage.

3. Ship's propulsion system according to claim 1 or 2, characterised in that the connecting shaft ($W_6$, $W_8$) is connected by means of bevel gears to the transmission block.

4. Ship's propulsion system according to one or more of claims 1 to 3, characterised in that the motors ($M_I$, $M_{II}$, $M_{III}$, $M_{IV}$) are arranged on the side of the respective associated propeller shaft ($W_3$) which is adjacent to the centre of the ship.

5. Ship's propulsion system according to one or more of claims 1 to 3, characterised in that at the outer end of each propeller shaft there is provided a motor ($M_I$, $M_{III}$) in direct engagement with the take-off shaft transmission gearwheel of the associated transmission gear stage ($S_1$).

6. Ship's propulsion system according to one or more of claims 1 to 5, characterised in that a generator ($G_2$) is incorporated in the connecting shaft.

7. Ship's propulsion system according to one or more claims 1 to 6, characterised in that switching clutches ($K_1$, $K_2$, $K_3$, $K_4$, $K_5$) are arranged in the drive shafts ($W_1$, $W_2$) of the transmission blocks, as well as between the transmission switching stages within the transmission blocks and within the connecting shafts ($W_6$, $W_8$) of the transmission blocks.

8. Ship's propulsion system according to one or more of claims 1 to 7, characterised in that one or all motors of each propeller side can be drivingly connected to the generators associated with this side, both with propellers disconnected and also with propellers connected.

9. Ship's propulsion system according to one or more of claims 1 to 8, characterised in that, with the driving of both propellers through one motor, the remaining motors of the other transmission block can be connected to their associated generators.

10. Ship's propulsion system according to one or more of claims 1 to 8, characterised in that one or all motors of a transmission block can be connected to the generators and/or propellers of both transmission blocks.

## Revendications

1. Installation de propulsion pour navires, comprenant plus de deux moteurs pour l'entraînement de deux hélices à pas variable et d'au moins un générateur, caractérisée par des dispositifs enclenchables additionnellement et déclenchables pour transmettre respectivement l'énergie d'entraînement d'un ou de plusieurs moteurs ($M_I$, $M_{II}$, $M_{III}$, $M_{IV}$), d'un côté du navire, aux deux hélices et/ou au(x) générateur(s), chaque hélice étant associée à un bloc de transmission muni de deux arbres menants ($W_1$, $W_2$), à un arbre mené ($W_3$) pour l'hélice et à un ou plusieurs arbres menés ($W_7$, $W_8$) pour des entraînements secondaires, qui sont reliés les uns aux autres par l'intermédiaire d'un arbre de solidarisation ($W_6$, $W_8$) pouvant être mis en et hors fonction, et disposé à angle droit par rapport aux arbres menants.

2. Installation de propulsion pour navires, selon la revendication 1, caractérisée par le fait que, à la vitesse angulaire nominale des moteurs, la vitesse angulaire des hélices peut être ramenée à des vitesses angulaires économiques par l'intermédiaire d'au moins un palier de sélection.

3. Installation de propulsion pour navires, selon les revendications 1 ou 2, caractérisée par le fait que l'arbre de solidarisation ($W_6$, $W_8$) est relié aux blocs de transmission par l'intermédiaire de pignons coniques.

4. Installation de propulsion pour navires, selon l'une ou plusieurs des revendications 1 à 3, caractérisée par le fait que les moteurs ($M_I$, $M_{II}$, $M_{III}$, $M_{IV}$) sont disposés du côté, tourné vers le centre du navire, de l'arbre ($W_3$) d'hélice respectivement associé.

5. Installation de propulsion pour navires, selon l'une ou plusieurs des revendications 1 à 3, caractérisée par le fait qu'un moteur ($M_I$, $M_{III}$) est disposé sur chaque côté extérieur d'un arbre d'hélice, avec prise directe dans le pignon de transmission de l'arbre mené du palier de transmission ($S_1$) considéré.

6. Installation de propulsion pour navires, selon l'une ou plusieurs des revendications 1 à 5, caractérisée par le fait qu'un générateur ($G_2$) est intégré dans l'arbre de solidarisation.

7. Installation de propulsion pour navires selon l'une ou plusieurs des revendications 1 à 6, caractérisée par le fait que des accouplements sélecteurs ($K_1$, $K_2$, $K_3$, $K_4$, $K_5$) sont installés dans les arbres menants ($W_1$, $W_2$) des blocs de transmission, ainsi qu'entre les paliers de sélection de transmission à l'intérieur des blocs de transmission et à l'intérieur de l'arbre de solidarisation ($W_6$, $W_8$) des blocs de transmission.

8. Installation de propulsion pour navires, selon l'une ou plusieurs des revendications 1 à 7, caractérisée par le fait qu'un ou tous les moteurs de chaque côté muni d'une hélice peut (peuvent) être mis en liaison d'entraînement avec les générateurs associés à ce côté, aussi bien lorsque les hélices sont hors fonction que lorsqu'elles sont en fonction.

9. Installation de propulsion pour navires, selon l'une ou plusieurs des revendications 1 à 8, caractérisée par le fait que, lorsque les deux hélices sont entraînées par l'intermédiaire d'un moteur, les moteurs restants de l'autre bloc de transmission peuvent être reliés aux générateurs qui leur sont associés.

10. Installation de propulsion pour navires, selon l'une ou plusieurs des revendications 1 à 8, caratérisée par le fait qu'un ou tous les moteurs d'un bloc de transmission peuvent être reliés aux générateurs et/ou aux hélices des deux blocs de transmission.

# FIG 1

# FIG 1A

# FIG 2

# FIG 2A

_Verstell-Propellerdiagramm   4  Motoren - 2 Propeller_

▨ Motorkennfeld im Propellerkennfeld bei Drehzahl konstant
und entsprechender Schiffgeschwindigkeit
Motoren gleicher Leistung

Kennfeld Motoren.

95

95

92

89

83

77

73

67

62

55

50

Gesamtmotorenleistung ——— %

Schiffgeschwindigkeit ——— %

_Verstell-Propellerdrehzahl ——— %_

_Fig. 3_

*Verstell-Propellerdiagramm   2 Motoren - 2 Propeller*

▨ *Motorkennfeld im Propellerkennfeld bei Drehzahl konstant*
*und entsprechender Schiffgeschwindigkeit*
*Motoren gleicher Leistung*

*Fig. 4*

Verstell-Propellerdiagramm  1 Motor – 2 Propeller

▨ Motorkennfeld im Propellerkennfeld bei Drehzahl konstant

und entsprechender Schiffgeschwindigkeit

Motoren gleicher Leistung

Fig. 5

**Fig. 6**

## Beispiel für Fahrmöglichkeiten zu Fig. 1,1A,2,2A

Backbord ◄——┃——► Steuerbord

| Pos. | Motoren I | Motoren II | K1 | K2 | K3 | K4 | K5 | Propeller | reduzierte Drehzahl | Gen. G1 | Gen. G2 | Gen. G1 | Propeller reduzierte Drehzahl | | K5 | K4 | K3 | K2 | K1 | Motoren IV | Motoren III | Pos. |
|------|---|---|----|----|----|----|----|-----------|---------------------|------|------|------|-------------------------------|---|----|----|----|----|----|------------|-------------|------|
| 1 | ● | | E | D | E | D | D | ● | | ● | | ○ | | ○ | D | D | E | D | E | | ○ | 1 |
| 2 | | ● | D | E | E | D | D | ● | | ● | | ○ | | ○ | D | D | E | E | D | ○ | | 2 |
| 3 | ● | | E | D | D | D | D | | | ● | | ○ | | | D | D | D | D | E | | ○ | 3 |
| 4 | | ● | D | E | D | D | D | | | ● | | ○ | | | D | D | D | E | D | ○ | | 4 |
| 5 | ● | ● | E | E | E | D | D | ● | | ● | | ○ | | ○ | D | D | E | E | E | ○ | ○ | 5 |
| 6 | ● | ● | E | E | D | D | D | | | ● | | ○ | | | D | D | D | E | E | ○ | ○ | 6 |
| 7 | | | | | | | | | | | | | | | | | | | | | | 7 |
| 8 | | | | | | | | | | | | | | | | | | | | | | 8 |
| 9 | | | | | | | | | | | | | | | | | | | | | | 9 |
| 10 | | | | | | | | | | | | | | | | | | | | | | 10 |
| 11 | | | | | | | | | | | | | | | | | | | | | | 11 |
| 12 | | | | | | | | | | | | | | | | | | | | | | 12 |
| 13 | | | | | | | | | | | | | | | | | | | | | | 13 |
| 14 | | | | | | | | | | | | | | | | | | | | | | 14 |

◑ In Betrieb, angetrieben vom Motor Back- oder Steuerbordseite
● In Betrieb, angetrieben vom Motor Backbordseite
○ In Betrieb, angetrieben vom Motor Steuerbordseite

E = Kupplung eingeschaltet
D = Kupplung ausgeschaltet

EP 0 246 631 B1

Fig. 7

**Beispiel für Fahrmöglichkeiten zu Fig. 1,1A,2,2A**

Backbord ←——|——→ Steuerbord

| Pos. | Motoren I | Motoren II | K1 | K2 | K3 | K4 | K5 | Propeller reduzierte Drehzahl | Gen. G1 | Gen. G2 | Gen. G1 | Propeller reduzierte Drehzahl | K5 | K4 | K3 | K2 | K1 | Motoren IV | Motoren III | Pos |
|---|---|---|---|---|---|---|---|---|---|---|---|---|---|---|---|---|---|---|---|---|
| 1 |   | ● | D | E | D | E | E | ● | ● | ● |   | ● | E | D | D | D | D |   |   | 1 |
| 2 | ● |   | E | D | D | E | E | ● | ● | ● |   | ● | E | D | D | D | D |   |   | 2 |
| 3 | ● | ● | E | E | D | E | E | ● | ● | ● |   | ● | E | D | D | D | D |   |   | 3 |
| 4 |   | ● | D | E | D | E | E | ● | ● | ● | ● | ● | E | E | D | D | D |   |   | 4 |
| 5 | ● |   | E | D | D | E | E | ● | ● | ● | ● | ● | E | E | D | D | D |   |   | 5 |
| 6 | ● | ● | E | E | D | E | E | ● | ● | ● | ● | ● | E | E | D | D | D |   |   | 6 |
| 7 |   |   | D | D | D | D | E | ○ |   | ○ | ○ | ○ | E | E | D | E | D | ○ |   | 7 |
| 8 |   |   | D | D | D | D | E | ○ |   | ○ | ○ | ○ | E | E | D | D | E |   | ○ | 8 |
| 9 |   |   | D | D | D | D | E | ○ |   | ○ | ○ | ○ | E | E | D | E | E | ○ | ○ | 9 |
| 10 |   |   | D | D | D | E | E | ○ | ○ | ○ | ○ | ○ | E | E | D | E | D | ○ |   | 10 |
| 11 |   |   | D | D | D | E | E | ○ | ○ | ○ | ○ | ○ | E | E | D | D | E |   | ○ | 11 |
| 12 |   |   | D | D | D | E | E | ○ | ○ | ○ | ○ | ○ | E | E | D | E | E | ○ | ○ | 12 |
| 13 |   |   |   |   |   |   |   |   |   |   |   |   |   |   |   |   |   |   |   | 13 |
| 14 |   |   |   |   |   |   |   |   |   |   |   |   |   |   |   |   |   |   |   | 14 |

◑ In Betrieb, angetrieben vom Motor Back- oder Steuerbordseite
● In Betrieb, angetrieben vom Motor Backbordseite
○ In Betrieb, angetrieben vom Motor Steuerbordseite

E = Kupplung eingeschaltet
D = Kupplung ausgeschaltet

EP 0 246 631 B1

Fig. 8

## Beispiel für Fahrmöglichkeiten zu Fig. 1,1A,2,2A

Backbord ◄—│—► Steuerbord

| Pos | Motoren I | II | \| | \| Schaltkupplungen K1 | K2 | K3 | K4 | KS | \| | Propeller reduzierte Drehzahl | Generator G1 | G2 | G1 | Propeller reduzierte Drehzahl | \| | Schaltkupplungen KS | K4 | K3 | K2 | K1 | Motoren IV | III | Pos |
|---|---|---|---|---|---|---|---|---|---|---|---|---|---|---|---|---|---|---|---|---|---|---|---|
| 1 |  | ● | D | E | D | E | E |  | ● | ● | ● | ○ | ● |  | E | D | D | E | D | ○ |  | 1 |
| 2 | ● |  | E | D | D | E | E |  | ● | ● | ● | ○ | ● |  | E | D | D | E | D | ○ |  | 2 |
| 3 | ● | ● | E | E | D | E | E |  | ● | ● | ● | ○ | ● |  | E | D | D | E | D | ○ |  | 3 |
| 4 |  | ● | D | E | D | E | E |  | ● | ● | ● | ○ | ● |  | E | D | D | D | E |  | ○ | 4 |
| 5 | ● |  | E | D | D | E | E |  | ● | ● | ● | ○ | ● |  | E | D | D | D | E |  | ○ | 5 |
| 6 | ● | ● | E | E | D | E | E |  | ● | ● | ● | ○ | ● |  | E | D | D | D | E |  | ○ | 6 |
| 7 |  | ● | D | E | D | E | E |  | ● | ● | ● | ○ | ● |  | E | D | D | E | E | ○ | ○ | 7 |
| 8 | ● |  | E | D | D | E | E |  | ● | ● | ● | ○ | ● |  | E | D | D | E | E | ○ | ○ | 8 |
| 9 | ● | ● | E | E | D | E | E |  | ● | ● | ● | ○ | ● |  | E | D | D | E | E | ○ | ○ | 9 |
| 10 |  |  |  |  |  |  |  |  |  |  |  |  |  |  |  |  |  |  |  |  |  | 10 |
| 11 |  |  |  |  |  |  |  |  |  |  |  |  |  |  |  |  |  |  |  |  |  | 11 |
| 12 |  |  |  |  |  |  |  |  |  |  |  |  |  |  |  |  |  |  |  |  |  | 12 |
| 13 |  |  |  |  |  |  |  |  |  |  |  |  |  |  |  |  |  |  |  |  |  | 13 |
| 14 |  |  |  |  |  |  |  |  |  |  |  |  |  |  |  |  |  |  |  |  |  | 14 |

◑ In Betrieb, angetrieben vom Motor Back- oder Steuerbordseite
● In Betrieb, angetrieben vom Motor Backbordseite
○ In Betrieb, angetrieben vom Motor Steuerbordseite

E = Kupplung eingeschaltet
D = Kupplung ausgeschaltet

EP 0 246 631 B1

Fig. 9

## Beispiel für Fahrmöglichkeiten zu Fig. 1, 1A, 2, 2A

Backbord ◄───┼───► Steuerbord

| Pos | Motoren I | Motoren II | K1 | K2 | K3 | K4 | K5 | | | Propeller reduzierte Drehzahl | Generator G1 | Generator G2 | Generator G1 | Propeller reduzierte Drehzahl | | | KS | K4 | K3 | K2 | K1 | Motoren IV | Motoren III | Pos |
|---|---|---|---|---|---|---|---|---|---|---|---|---|---|---|---|---|---|---|---|---|---|---|---|---|
| 1 | | ● | D | E | D | D | E | | | ○ | ● | ○ | ○ | ○ | | | E | E | D | E | D | ○ | | 1 |
| 2 | | ● | D | E | D | D | E | | | ○ | ● | ○ | ○ | ○ | | | E | E | D | D | E | | ○ | 2 |
| 3 | | ● | D | E | D | D | E | | | ○ | ● | ○ | ○ | ○ | | | E | E | D | E | E | ○ | ○ | 3 |
| 4 | ● | | E | D | D | D | E | | | ○ | ● | ○ | ○ | ○ | | | E | E | D | E | D | ○ | | 4 |
| 5 | ● | | E | D | D | D | E | | | ○ | ● | ○ | ○ | ○ | | | E | E | D | D | E | | ○ | 5 |
| 6 | ● | | E | D | D | D | E | | | ○ | ● | ○ | ○ | ○ | | | E | E | D | E | E | ○ | ○ | 6 |
| 7 | ● | ● | E | E | D | D | E | | | ○ | ● | ○ | ○ | ○ | | | E | E | D | E | D | ○ | | 7 |
| 8 | ● | ● | E | E | D | D | E | | | ○ | ● | ○ | ○ | ○ | | | E | E | D | D | E | | ○ | 8 |
| 9 | ● | ● | E | E | D | D | E | | | ○ | ● | ○ | ○ | ○ | | | E | E | D | E | E | ○ | ○ | 9 |
| 10 | | | | | | | | | | | | | | | | | | | | | | | | 10 |
| 11 | | | | | | | | | | | | | | | | | | | | | | | | 11 |
| 12 | | | | | | | | | | | | | | | | | | | | | | | | 12 |
| 13 | | | | | | | | | | | | | | | | | | | | | | | | 13 |
| 14 | | | | | | | | | | | | | | | | | | | | | | | | 14 |

◗ In Betrieb, angetrieben vom Motor Back- oder Steuerbordseite

● In Betrieb, angetrieben vom Motor Backbordseite

○ In Betrieb, angetrieben vom Motor Steuerbordseite

E = Kupplung eingeschaltet

D = Kupplung ausgeschaltet

EP 0 246 631 B1

# FIG 10

# FIG 10A

# FIG 11

# FIG 11A

Fig. 12

## Beispiel für Fahrmöglichkeiten zu Fig. 10,10A,11,11A

Backbord ←—|—→ Steuerbord

| Pos | Motoren I | Motoren II | K1 | K2 | K3 | K4 | K5 | Propeller | red. Drehzahl | G1 | G2 | G1 | red. Drehzahl | Propeller | K5 | K4 | K3 | K2 | K1 | Motoren IV | Motoren III | Pos |
|---|---|---|---|---|---|---|---|---|---|---|---|---|---|---|---|---|---|---|---|---|---|---|
| 1 | ● |  | E | D | E | D | E/D | ● |  | ● | ◐ | ○ |  | ○ | D/E | D | E | D | E |  | ○ | 1 |
| 2 |  | ● | D | E | E | D | E/D | ● |  | ● | ◐ | ○ |  | ○ | D/E | D | E | E | D | ○ |  | 2 |
| 3 | ● |  | E | D | D | D | E/D |  |  | ● | ◐ | ○ |  |  | D/E | D | D | D | E |  | ○ | 3 |
| 4 |  | ● | D | E | D | D | E/D |  |  | ● | ◐ | ○ |  |  | D/E | D | D | E | D | ○ |  | 4 |
| 5 | ● | ● | E | E | E | D | E/D | ● |  | ● | ◐ | ○ |  | ○ | D/E | D | E | E | E | ○ | ○ | 5 |
| 6 | ● | ● | E | E | D | D | E/D |  |  | ● | ◐ | ○ |  |  | D/E | D | D | E | E | ○ | ○ | 6 |
| 7 |  |  |  |  |  |  |  |  |  |  |  |  |  |  |  |  |  |  |  |  |  | 7 |
| 8 |  |  |  |  |  |  |  |  |  |  |  |  |  |  |  |  |  |  |  |  |  | 8 |
| 9 |  |  |  |  |  |  |  |  |  |  |  |  |  |  |  |  |  |  |  |  |  | 9 |
| 10 |  |  |  |  |  |  |  |  |  |  |  |  |  |  |  |  |  |  |  |  |  | 10 |
| 11 |  |  |  |  |  |  |  |  |  |  |  |  |  |  |  |  |  |  |  |  |  | 11 |
| 12 |  |  |  |  |  |  |  |  |  |  |  |  |  |  |  |  |  |  |  |  |  | 12 |
| 13 |  |  |  |  |  |  |  |  |  |  |  |  |  |  |  |  |  |  |  |  |  | 13 |
| 14 |  |  |  |  |  |  |  |  |  |  |  |  |  |  |  |  |  |  |  |  |  | 14 |

(Schaltkupplungen: K1, K2, K3, K4, K5 links; K5, K4, K3, K2, K1 rechts)

◐ In Betrieb, angetrieben vom Motor Back- oder Steuerbordseite
● In Betrieb, angetrieben vom Motor Backbordseite
○ In Betrieb, angetrieben vom Motor Steuerbordseite

E = Kupplung eingeschaltet
D = Kupplung ausgeschaltet

EP 0 246 631 B1

EP 0 246 631 B1

**Fig. 13**

### Beispiel für Fahrmöglichkeiten zu Fig. 10,10A,11,11A

Backbord ◄——┼——► Steuerbord

| Pos | Motoren I | Motoren II | K1 | K2 | K3 | K4 | K5 | | Propeller reduzierte Drehzahl | Generator G1 | Generator G2 | Generator G1 | Propeller reduzierte Drehzahl | | K5 | K4 | K3 | K2 | K1 | Motoren IV | Motoren III | Pos |
|---|---|---|---|---|---|---|---|---|---|---|---|---|---|---|---|---|---|---|---|---|---|---|
| | | | | | | | | | Propeller | Generator | | | Propeller | | Schaltkupplungen | | | | | Motoren | | |
| 1 | | ● | D | E | D | E | E | | ● | ● | ● | ● | ● | | E | E | D | D | D | | | 1 |
| 2 | ● | | E | D | D | E | E | | ● | ● | ● | ● | ● | | E | E | D | D | D | | | 2 |
| 3 | ● | ● | E | E | D | E | E | | ● | ● | ● | ● | ● | | E | E | D | D | D | | | 3 |
| 4 | | | D | D | D | E | E | | ○ | ○ | ○ | ○ | ○ | | E | E | D | E | D | ○ | | 4 |
| 5 | | | D | D | D | E | E | | ○ | ○ | ○ | ○ | ○ | | E | E | D | D | E | | ○ | 5 |
| 6 | | | D | D | D | E | E | | ○ | ○ | ○ | ○ | ○ | | E | E | D | E | E | ○ | ○ | 6 |
| 7 | | | | | | | | | | | | | | | | | | | | | | 7 |
| 8 | | | | | | | | | | | | | | | | | | | | | | 8 |
| 9 | | | | | | | | | | | | | | | | | | | | | | 9 |
| 10 | | | | | | | | | | | | | | | | | | | | | | 10 |
| 11 | | | | | | | | | | | | | | | | | | | | | | 11 |
| 12 | | | | | | | | | | | | | | | | | | | | | | 12 |
| 13 | | | | | | | | | | | | | | | | | | | | | | 13 |
| 14 | | | | | | | | | | | | | | | | | | | | | | 14 |

◐ In Betrieb, angetrieben vom Motor Back- oder Steuerbordseite
● In Betrieb, angetrieben vom Motor Backbordseite
○ In Betrieb, angetrieben vom Motor Steuerbordseite

E = Kupplung eingeschaltet
D = Kupplung ausgeschaltet

Fig. 14

## Verstell-Propellerdiagramm 4 Motoren - 2 Propeller

Motorkennfeld im Propellerkennfeld bei konstanter Drehzahl
und entsprechender Schiffsgeschwindigkeit

- ▨ 4 Motoren - 100 % installierte Leistung
- ◩ 2 Vater-Motoren - 60 % installierte Leistung
- ▨ 2 Sohn-Motoren - 40 % installierte Leistung

Fig. 15

## Verstell-Propellerdiagramm 4 Motoren - 2 Propeller

### 1 Vater-Motor — 2 Propeller bei ökonomischer Propellerdrehzahl

Motorkennfeld im Propellerkennfeld bei konstanter Drehzahl
und entsprechender Schiffsgeschwindigkeit

4 Motoren - 100% installierte Leistung

◩ 1 Vater-Motor - 30% installierte Leistung

Fig. 16

## Verstell-Propellerdiagramm 4 Motoren - 2 Propeller

### 1 Sohn-Motor - 2 Propeller bei ökonomischer Propellerdrehzahl

Motorkennfeld im Propellerkennfeld bei konstanter Drehzahl
und entsprechender Schiffsgeschwindigkeit

4 Motoren - 100% installierte Leistung
▨ 1 Sohn-Motor - 20% installierte Leistung

Fig. 17

Backbord-Anlage

Steuerbord-Anlage

FIG 18

EP 0 246 631 B1

Backbord-Anlage

Steuerbord-Anlage

MI

MII

MIV

MIII

FIG 19

EP 0 246 631 B1

Backbord-Anlage

Steuerbord-Anlage

MI

MII

MIV

MIII

EP 0 246 631 B1

FIG 20

Fig. 21

## Beispiel für Fahrmöglichkeiten zu Fig 18 u. 19

Backbord ◄——|——► Steuerbord

| Pos. | Motoren I | Motoren II | K1 | K2 | K3 | K4 | K5 | Propeller | red. Drehzahl | G1 | G2 | G1 | red. Drehzahl | Propeller | K5 | K4 | K3 | K2 | K1 | IV | III | Pos |
|---|---|---|---|---|---|---|---|---|---|---|---|---|---|---|---|---|---|---|---|---|---|---|
| 1 | ● | ● | E | E | D | D |  | ● |  | ● |  | ○ | ○ |  |  | D | D | E | E | ○ | ○ | 1 |
| 2 |  | ● | D | E | D | D |  | ● |  | ● |  | ○ | ○ |  |  | D | D | E | D | ○ |  | 2 |
| 3 | ● |  | E | D | D | D |  | ● |  |  |  | ○ |  |  |  | D | D | D | E |  | ○ | 3 |
| 4 |  | ● | D | D | D | D |  |  |  | ● |  | ○ |  |  |  | D | D | D | D | ○ |  | 4 |
| 5 | ● | ● | E | D | D | D |  | ● |  | ● |  | ○ | ○ |  |  | D | D | D | E | ○ | ○ | 5 |
| 6 |  |  |  |  |  |  |  |  |  |  |  |  |  |  |  |  |  |  |  |  |  | 6 |
| 7 |  |  |  |  |  |  |  |  |  |  |  |  |  |  |  |  |  |  |  |  |  | 7 |
| 8 |  |  |  |  |  |  |  |  |  |  |  |  |  |  |  |  |  |  |  |  |  | 8 |
| 9 |  |  |  |  |  |  |  |  |  |  |  |  |  |  |  |  |  |  |  |  |  | 9 |
| 10 |  |  |  |  |  |  |  |  |  |  |  |  |  |  |  |  |  |  |  |  |  | 10 |
| 11 |  |  |  |  |  |  |  |  |  |  |  |  |  |  |  |  |  |  |  |  |  | 11 |
| 12 |  |  |  |  |  |  |  |  |  |  |  |  |  |  |  |  |  |  |  |  |  | 12 |
| 13 |  |  |  |  |  |  |  |  |  |  |  |  |  |  |  |  |  |  |  |  |  | 13 |
| 14 |  |  |  |  |  |  |  |  |  |  |  |  |  |  |  |  |  |  |  |  |  | 14 |

◑ In Betrieb, angetrieben vom Motor Back- oder Steuerbordseite
● In Betrieb, angetrieben vom Motor Backbordseite
○ In Betrieb, angetrieben vom Motor Steuerbordseite

E = Kupplung eingeschaltet
D = Kupplung ausgeschaltet

EP 0 246 631 B1

# Fig. 22

**Beispiel für Fahrmöglichkeiten zu Fig. 18 u. 19**

Backbord ◄──┼──► Steuerbord

| Pos | Motoren I | Motoren II | K1 | K2 | K3 | K4 | K5 | Propeller reduzierte Drehzahl | Generator G1 | Generator G2 | Generator G1 | Propeller reduzierte Drehzahl | K5 | K4 | K3 | K2 | K1 | Motoren IV | Motoren III | Pos |
|---|---|---|---|---|---|---|---|---|---|---|---|---|---|---|---|---|---|---|---|---|
| 1 | | ● | D | D | E | | E | ● | ● | ● | | ● | E | | D | D | D | | | 1 |
| 2 | | ● | D | D | E | | E | ● | ● | ● | ○ | ● | E | | D | D | D | ○ | | 2 |
| 3 | | | D | D | D | | E | ○ | | ○ | ○ | ○ | E | E | D | D | | ○ | | 3 |
| 4 | | ● | D | D | D | | E | ○ | ● | ○ | ○ | ○ | E | E | D | D | | ○ | | 4 |
| 5 | | ● | D | D | E | | D | ● | ● | | ○ | ○ | D | E | D | D | | ○ | | 5 |
| 6 | | ● | D | D | E | | D | ● | ● | ○ | ○ | ○ | E | E | D | D | | ○ | | 6 |
| 7 | | ● | D | D | E | | E | ● | ● | ● | ○ | ○ | D | E | D | D | | ○ | | 7 |
| 8 | | | | | | | | | | | | | | | | | | | | 8 |
| 9 | | | | | | | | | | | | | | | | | | | | 9 |
| 10 | | | | | | | | | | | | | | | | | | | | 10 |
| 11 | | | | | | | | | | | | | | | | | | | | 11 |
| 12 | | | | | | | | | | | | | | | | | | | | 12 |
| 13 | | | | | | | | | | | | | | | | | | | | 13 |
| 14 | | | | | | | | | | | | | | | | | | | | 14 |

Schaltkupplungen (links: K1 K2 K3 K4 K5 / rechts: K5 K4 K3 K2 K1)

◑ In Betrieb, angetrieben vom Motor Back- oder Steuerbordseite
● In Betrieb, angetrieben vom Motor Backbordseite
○ In Betrieb, angetrieben vom Motor Steuerbordseite

E = Kupplung eingeschaltet
D = Kupplung ausgeschaltet

EP 0 246 631 B1

Backbord-Anlage                                    Steuerbord-Anlage

FIG 23

EP 0 246 631 B1

Steuerbord-Anlage

Backbord-Anlage

FIG 24

Backbord-Anlage   Steuerbord-Anlage

FIG 25

EP 0 246 631 B1

Fig. 26

Beispiel für Fahrmöglichkeiten zu Fig. 9 u.11

Backbord ←—|—→ Steuerbord

| Pos | Motoren I | Motoren II | Schaltkupplungen | | | | | Propeller | reduzierte Drehzahl | Generator G1 | G2 | G1 | Propeller reduzierte Drehzahl | Schaltkupplungen | | | | | Motoren IV | Motoren III | Pos |
|---|---|---|---|---|---|---|---|---|---|---|---|---|---|---|---|---|---|---|---|---|---|
| | | | K1 | K2 | K3 | K4 | KS | | | | | | | KS | K4 | K3 | K2 | K1 | | | |
| 1 | ● | ● | E | E | E | D | D | ● | | ● | | ○ | ○ | D | D | E | E | E | ○ | ○ | 1 |
| 2 | ● | ● | E | E | E | D | E/D | ● | | ● | ◐ | ○ | ○ | D/E | D | E | E | E | ○ | ○ | 2 |
| 3 | | ● | D | E | E | D | E/D | ● | | ● | ◐ | ○ | ○ | D/E | D | E | E | D | ○ | | 3 |
| 4 | ● | | E | D | D | D | D | ● | | | | | ○ | D | D | D | D | E | | ○ | 4 |
| 5 | ● | | E | D | E | D | E/D | ● | | ● | ◐ | ○ | ○ | D/E | D | E | D | E | | ○ | 5 |
| 6 | ● | ● | E | E | D | D | E/D | ● | | ● | ◐ | ○ | ○ | D/E | D | D | E | E | ○ | ○ | 6 |
| 7 | ● | ● | E | E | D | D | E | ● | | ● | ● | ● | ○ | E | D | D | D | E | | ○ | 7 |
| 8 | ● | | E | D | D | D | E | ● | | ○ | ○ | ○ | ○ | E | D | D | E | E | ○ | ○ | 8 |
| 9 | | | | | | | | | | | | | | | | | | | | | 9 |
| 10 | | | | | | | | | | | | | | | | | | | | | 10 |
| 11 | | | | | | | | | | | | | | | | | | | | | 11 |
| 12 | | | | | | | | | | | | | | | | | | | | | 12 |
| 13 | | | | | | | | | | | | | | | | | | | | | 13 |
| 14 | | | | | | | | | | | | | | | | | | | | | 14 |

◐ In Betrieb, angetrieben vom Motor Back- oder Steuerbordseite
● In Betrieb, angetrieben vom Motor Backbordseite
○ In Betrieb, angetrieben vom Motor Steuerbordseite

E = Kupplung eingeschaltet
D = Kupplung ausgeschaltet

EP 0 246 631 B1

Fig. 27

## Beispiel für Fahrmöglichkeiten zu Fig. 9 u. 11

Backbord ◄—┼—► Steuerbord

| Pos | Motoren I | Motoren II | K1 | K2 | K3 | K4 | K5 | Propeller reduzierte Drehzahl | G1 | G2 | G1 | Propeller reduzierte Drehzahl | K5 | K4 | K3 | K2 | K1 | Motoren IV | Motoren III | Pos |
|---|---|---|---|---|---|---|---|---|---|---|---|---|---|---|---|---|---|---|---|---|
| 1 | | ● | D | E | D | E | E | ● | ● | ● | ● | ● | E | E | D | D | D | | | 1 |
| 2 | | | D | D | D | E | E | ○ | ○ | ○ | ○ | ○ | E | E | D | E | D | ○ | | 2 |
| 3 | | ● | D | E | D | D | D | | ● | | | | D | D | D | D | D | | | 3 |
| 4 | | ● | D | E | D | D | E | | ● | ● | | | D | D | D | D | D | | | 4 |
| 5 | | ● | D | E | D | D | E | | ● | ● | ● | | E | D | D | D | D | | | 5 |
| 6 | | | D | D | D | D | D | | | | ○ | | D | D | D | E | D | ○ | | 6 |
| 7 | | | D | D | D | D | D | | | ○ | ○ | | E | D | D | E | D | ○ | | 7 |
| 8 | | | D | D | D | D | E | ○ | ○ | ○ | | | E | D | D | E | D | ○ | | 8 |
| 9 | | | | | | | | | | | | | | | | | | | | 9 |
| 10 | | | | | | | | | | | | | | | | | | | | 10 |
| 11 | | | | | | | | | | | | | | | | | | | | 11 |
| 12 | | | | | | | | | | | | | | | | | | | | 12 |
| 13 | | | | | | | | | | | | | | | | | | | | 13 |
| 14 | | | | | | | | | | | | | | | | | | | | 14 |

◐ In Betrieb, angetrieben vom Motor Back- oder Steuerbordseite
● In Betrieb, angetrieben vom Motor Backbordseite
○ In Betrieb, angetrieben vom Motor Steuerbordseite

E = Kupplung eingeschaltet
D = Kupplung ausgeschaltet

EP 0 246 631 B1